# EUROPÄISCHE PATENTSCHRIFT

(11) **EP 3 181 439 B1**
(45) Veröffentlichungstag und Bekanntmachung des Hinweises auf die Patenterteilung: **07.11.2018**
(21) Anmeldenummer: 16002609.2
(22) Anmeldetag: 08.12.2016
(51) Int. Cl.: B62M 9/14

(54) **KETTENRING**
CHAIN RING
ANNEAU POUR FIL DE CHAINE

(30) Priorität: 15.12.2015 DE 102015016263
(43) Veröffentlichungstag der Anmeldung: 21.06.2017
(73) Patentinhaber: SRAM Deutschland GmbH, 97424 Schweinfurt (DE)
(72) Erfinder: Braedt, Henrik, 97456 Dittelbrunn/OT Hambach (DE)

(56) Entgegenhaltungen:
- WO-A1-2013/013256
- GB-A- 510 474
- US-A- 4 127 038

## Beschreibung

Die Erfindung betrifft einen Kettenring mit einem ersten und einem zweiten Kettenring-Segment für eine Kettenringanordnung eines Fahrrades. Des Weiteren betrifft die Erfindung eine Kettenringanordnung und eine Antriebsanordnung für ein Fahrrad mit einem erfindungsgemäßen Kettenring.

Häufig wird versucht, das problematische Schalten unter Last am vorderen Kettenblatt zu vermeiden, und anstelle dessen eine möglichst gute Abdeckung des Gangspektrums mittels einer entsprechend ausgestalteten hinteren Mehrfach-Ritzelanordnungen zu erreichen. Ein vorderes Einzelkettenblatt zusammen mit einer hohen Anzahl von elf oder zwölf hinteren Ritzeln erreicht gewöhnlich eine gute Abdeckung. Aufgrund der hohen Anzahl von axial benachbarten Ritzeln am Hinterrad vergrößert sich allerdings die Breite der Mehrfach-Ritzelanordnung. Durch das axial festgelegte Einzelkettenblatt ist auch die mit dem Kettenblatt in Eingriff stehende Kette am vorderen Kettenblatt axial festgelegt. Am Hinterrad muss die Kette jedoch beim Schalten vom kleinsten zum größten Ritzel in axialer Richtung eine Strecke von mehreren Zentimetern überwinden. Dies führt zu einem erhöhten Kettenquerlauf (auch Schräglauf genannt), der sich negativ auf den Wirkungsgrad, die Verschleißanfälligkeit und die Geräuschentwicklung des Antriebs auswirkt.

Aus dem Stand der Technik sind Lösungsansätze bekannt, die sich mit dieser Problematik beschäftigen. So werden axial verschiebbare Einzelkettenblätter bereitgestellt, die sich der Kettenlinie anpassen sollen. Aus der US 6,173,982 B1, US 2013/008282 A1 und der DE 10 2015 104 670 A1 sind verschiedene Ansätze bekannt. Das einzelne vordere Kettenblatt soll sich aufgrund der im Schräglauf auftretenden Axialkräfte der Kette verschieben und sich entsprechend der Position der Kette an der hinteren Ritzelanordnung ausrichten. Das Kettenblatt ist dafür axial verschiebbar gelagert, beispielsweise mittels Gleitlager oder Gelenken. Hier stellt sich das Problem, dass das Schalten an der hinteren Mehrfach-Ritzelanordnung während des Tretens geschieht. Das Kettenblatt (auch Kettenring genannt) steht mit der Kette in Eingriff und ist beim Treten unter Last, d. h. die Kette steht unter Zug und drückt das Kettenblatt gegen die Lagerung. Eine Axialbewegung des Kettenblatts geschieht somit unter der vollen Last der unter Zug stehenden Antriebskette, was häufig zu einem Verkanten des Kettenblatts an den Lagerungen führt und die Bewegung erschwert. Es kommt hinzu, dass die von der Kette auf den Kettenring wirkende Axialkraft relativ gering ist, und oft nicht ausreicht, um eine Verschiebung des Kettenrings sicherzustellen.

Aus dem Stand der Technik sind auch Mehrfach-Kettenblattanordnungen bekannt, welche zumindest ein segmentiertes Kettenblatt umfassen. Die Kettenblattsegmente sind entlang ihrer Enden in Umfangsrichtung nicht miteinander verbunden und somit relativ zueinander frei und unabhängig voneinander bewegbar. Die Segmente können mittels einer Schalthilfe, z. B. einem Kabelzug, in die Kettenlinie hinein verkippt oder axial verschoben und so mit der Kette in Eingriff gebracht werden. Beim Wechsel des Übersetzungsverhältnisses am vorderen Kettenblatt wandert also nicht die Kette zwischen feststehenden benachbarten Kettenblättern, sondern umgekehrt werden die Kettenblätter in die feststehende Kettenlinie hinein verschoben. Ziel dieser Anordnungen ist es, das Schalten zwischen den benachbarten vorderen Kettenblättern zu erleichtern, ohne dabei die Kettenlinie zu ändern. Allerdings überwindet dieser Ansatz nicht die Nachteile des Kettenschräglaufs, die gerade bei Anordnungen mit einem einzigen vorderen Kettenblatt und einer erhöhten Anzahl von hinteren Ritzeln auftreten.

Dokument WO 2013/0132556 A1 offenbart die Präambel des Anspruchs 1. Gelöst wird dieses Problem durch einen erfindungsgemäßen Kettenring nach Anspruch 1.

Der erfindungsgemäße Kettenring für eine Kettenringanordnung eines Fahrrades weist ein erstes Kettenring-Segment und ein zweites Kettenring-Segment auf. Das erste Kettenring-Segment und das zweite Kettenring-Segment sind drehbar um eine Rotationsachse A anordbar. Das erste Kettenring-Segment weist in einer Umfangsrichtung U ein erstes Vorderende und ein erstes Rückende auf. Das zweite Kettenring-Segment weist in der Umfangsrichtung U ein zweites Vorderende und ein zweites Rückende auf. Das erste Vorderende des ersten Kettenring-Segments und das zweite Rückende des zweiten Kettenring-Segments sind beweglich verbunden, so dass sich das erste Kettenring-Segment und das zweite Kettenring-Segment in Richtung der Rotationsachse A relativ zueinander bewegen können. Die Axialbewegung eines Kettenring-Segments ist durch ein benachbartes Kettenring-Segment begrenzt, mit dem es beweglich verbunden ist. Das erste Kettenring-Segment und das zweite Kettenring-Segment weisen eine Vielzahl von Zähnen entlang ihres äußeren Umfangs zum Eingreifen in eine Antriebskette auf.

Die Verbindung von benachbarten Segmenten in Umfangsrichtung U führt dazu, dass die Axialbewegung eines Segments gegenüber seinem benachbarten Segment begrenzt wird. Anders als im Stand der Technik können einzelne Segmente nicht unbegrenzt und unabhängig von dem benachbarten Segment bewegt werden.

Die Segmentierung des Kettenrings erlaubt eine Axialverschiebung des nicht unter Last stehenden bzw. unter weniger Last stehenden Kettenring-Segments. Die Kettenring-Segmente werden hauptsächlich beim Einlaufen in die Kette mit der Kettenlinie ausgerichtet. Gerade wenn die ersten Zähne des Segments mit der Kette in Eingriff gebracht werden, und noch bevor diese unter Last stehen, also bevor die Kettenrolle mit der Lastflanke des Zahns zusammenwirkt, kommt es zur Axialverschiebung des Kettenring-Segments. Wenn die ersten Zähne des Segments mit der Kette in Eingriff gebracht werden, also in die Kette einlaufen, wirkt zunächst nur die Axialkraft F des Kettenschräglaufs auf die Zähne, nicht aber die Zugkraft Z. In diesem Bereich verschieben sich die Segmente am Leichtesten. Sobald das Segment unter Last steht, verschiebt es sich weniger leichtgängig.

Vorteilhaft dabei ist, dass sich ein Segment des erfindungsgemäßen segmentierten Kettenrings leichter in axialer Richtung verschiebt, weil anders als bei einem einstückigen Kettenring nicht der gesamte Kettenring unter der Last der Kette steht.

Wie oben beschrieben steht ein Segment erst unter Last, wenn eine Rolle der Antriebskette mit der Lastflanke eines Zahnes zusammenwirkt.

Zum besseren Verständnis kann das am Fahrrad drehbar montierte Kettenblatt in zwei etwa gleich große Bereiche oder Hälften eingeteilt werden; ein vorderer, beim Treten ständig unter Last stehender Bereich, der in Fahrtrichtung des Fahrrades nach vorne zeigt und mit der Kette in Eingriff steht und ein hinterer, ständig lastfreier Bereich, der nicht mit der Kette in Eingriff steht. Aus Gründen der Vereinfachung ist im Folgenden aber weiter von Hälften die Rede, auch wenn diese nicht genau eine Hälfte des Kettenrings ausmachen.

Der Kettenring mit seinen beiden Segmenten rotiert um die Rotationsachse A, so dass das erste und das zweite Kettenring-Segment im Wechsel in den unter Last stehenden Bereich eintreten und wieder austreten.

Gerade beim Einlaufen eines Kettenring-Segments in die Antriebskette ist das Segment zunächst lastfrei, so dass eine relativ geringe Axialkraft der schräglaufenden Kette auf das Kettenring-Segment ausreicht, um dieses in axialer Richtung zu bewegen.

Damit bewegen sich das erste und das zweite Kettenring-Segment im Wechsel schrittweise je nach Schräglauf der Kette in eine Richtung entlang der Rotationsachse A. Die Bewegung findet hauptsächlich beim Eingreifen der Segmente in die Antriebskette statt, also zu jeder halben Kurbelumdrehung. Die Axialbewegung des Kettenring-Segments ist durch sein benachbartes Segment begrenzt, mit dem es beweglich verbunden ist.

Vorzugsweise weist das erste Kettenring-Segment an seinem ersten Vorderende einen Vorsprung und das zweite Kettenring-Segment an seinem zweiten Rückende eine Aussparung auf. Das erste und zweite Kettenring-Segment sind miteinander verbindbar, indem der Vorsprung in die Aussparung eingreift.

Besonders bevorzugt ist eine solche Verbindung ähnlich einer Nut- und Federverbindung gestaltet, wobei eine Bewegung der Segmente relativ zueinander in axialer Richtung möglich ist.

Grundsätzlich ist jegliche Art von Verbindungen denkbar, die dazu geeignet ist, das erste und das zweite Kettenring-Segment an ihren sich in Umfangsrichtung U zugewandten Enden (Übergangsbereich) in Richtung der Rotationsachse A relativ zueinander beweglich zu verbinden. Das Ineinandergreifen von Elementen, wie z. B. einem Vorsprung und einer Aussparung bzw. einer Nut und einer Feder bietet sich an. Der Vorsprung bzw. die Aussparung kann dabei am ersten oder am zweiten Segment angeordnet sein.

Die Enden eines Kettenring-Segments können sich in ihrer Form entweder gleichen oder unterscheiden. In einer bevorzugten Ausführungsform weist das Vorderende eines Segments eine konvexe und das Rückende eine konkave Form auf. Es wäre aber auch denkbar, die Enden der Segmente geradlinig auszubilden.

Vorzugsweise ist in Richtung der Rotationsachse A gesehen eine Breite des Vorsprungs geringer, als eine Breite der Aussparung, so dass eine Relativbewegung zwischen dem ersten Kettenring-Segment und dem zweiten Kettenring-Segment in Richtung der Rotationsachse möglich ist.

Das heißt, die Breite des Vorsprungs misst in axialer Richtung A weniger als die Breite der Ausnehmung und schafft damit den gewünschten Bewegungsfreiraum zwischen den Segmenten.

Besonders bevorzugt beträgt die Differenz zwischen der Breite des Vorsprungs und der Breite der Ausnehmung in axialer Richtung A etwa 0,7 mm. Das erzeugte Axialspiel erlaubt es dem ersten Kettenring-Segment, sich je Kurbelumdrehung relativ zum zweiten Kettenring-Segment in axialer Richtung A um maximal 0,7 mm zu bewegen.

Die maximale Bewegung der Segmente relativ zueinander bzw. gegenüber dem benachbarten Kettenring-Segment wird durch das Spiel in der Verbindung definiert.

Je größer das Spiel, desto größer ist die Relativbewegung je Kurbelumdrehung. Die Relativbewegung der Segmente führt zu einer schrittweisen Verlagerung des gesamten Kettenrings in axialer Richtung A.

Das axiale Spiel bzw. der Bewegungsfreiraum zwischen den Segmenten ist einerseits ausreichend groß zu bemessen, so dass sich die Segmente je Kurbelumdrehung genügend weit in die Axialrichtung A bewegen. Andererseits darf das Spiel nicht zu groß sein, weil es sonst zu einem ungewollten Abspringen der Antriebskette vom Kettenring kommen kann.

Vorzugsweise werden die Kettenring-Segmente und damit der gesamte Kettenring von einer Axialkraft F in Richtung der Rotationsachse A bewegt. Die Axialkraft F wird von der Antriebskette auf den Kettenring ausgeübt, wenn ein Kettenglied der Antriebskette mit einem Zahn in Eingriff gebracht wird. Die Axialkraft F der Kette wird beim Zusammenwirken der Kettenlasche mit der Fase des Zahns auf das Segment übertragen. Je geringer der Schräglauf der Kette, desto weiter taucht der Zahn in die Kette ein, bevor es zum Kontakt zwischen Kettenlasche und der Fase des Zahnes kommt. Damit reduziert sich auch die Axialbewegung der Segmente mit abnehmendem Kettenschräglauf.

Im Idealfall liegen der vordere Kettenring und das gewählte hintere Ritzel in einer Ebene - die ideale Kettenlinie, ohne seitliche Belastung der Kette. Abweichungen von dieser idealen Kettenlinie werden als Schräglauf bezeichnet. Je größer der Schräglauf der Antriebskette bzw. je größer der Winkel der Kette zum Kettenring, desto größer ist auch die aufgrund des Schräglaufs ausgeführte Axialbewegung des Kettenring-Segments. Abhängig von der Richtung des Schräglaufs, wird eine Axialkraft F nach innen oder nach außen wirken und den Kettenring entsprechend entlang der Rotationsachse A bewegen. Der Kettenring bewegt sich solange entlang der Rotationsachse A, bis keine oder kaum noch Belastung durch Schräglauf auftritt, also eine nahezu ideale Kettenlinie hergestellt ist.

In der Praxis kann der axiale Bauraum für den Kettenring jedoch geringer als die Breite der Mehrfach-Ritzelanordnung sein, so dass sich der ideale Zustand nur im mittleren Gangbereich realisieren lässt. Dennoch sind die positiven Effekte des verringerten Schräglaufs gerade in den Extrempositionen am größten und kleinsten Ritzel stark zu spüren.

Vorteilhaft dabei ist, dass sich der Kettenring aufgrund der Axialkraft F der Kette selbsttätig ausrichtet. Es muss keine weitere Kraft in das System aus Kettenring und Kette eingebracht werden. Eine Steuerung von außen, wie sie beispielsweise beim Schalten durch Betätigen eines Zuges auftritt, ist nicht nötig. Je nach Schräglauf der Kette richtet sich der Kettenring sozusagen automatisch aus und stellt eine zumindest annähernd ideale Kettenlinie her. Zusätzliche Mittel zum Verschieben der Segmente, wie sie aus dem Stand der Technik bekannt sind, werden nicht benötigt.

Vorzugsweise weist die Vielzahl von Zähnen alternierende erste Zähne und zweite Zähne auf, wobei sich die ersten Zähne von den zweiten Zähnen unterscheiden.

Besonders bevorzugt unterscheiden sich die ersten und zweiten Zähne in ihrer Form und/oder ihrer Dimension. Die ersten und zweiten Zähne können sich auch in ihrer Ausdehnung in axialer Richtung und/oder ihn radialer Richtung und/oder in Umfangsrichtung unterscheiden. Weiter können die ersten und/oder zweiten Zähne asymmetrisch in axialer Richtung und/oder in Umfangsrichtung ausgebildet sein. Die Form der Zähne kann sich bezüglich ihrer Zahnspitze, Flankenwinkel und Fasen unterscheiden. Aus dem Stand der Technik sind diverse Ausführungsformen bekannt, die sich günstig auf die Führungseigenschaften der Antriebskette auswirken. Beispielsweise sind die ersten Zähne dicker, breiter und/oder länger als die zweiten Zähne ausgebildet.

Dabei müssen aber nicht zwingend alle Zähne der Vielzahl von Zähnen als alternierende erste und zweite Zähne ausgebildet sein. Auch eine Folge von wenigstens drei alternierenden ersten und zweiten Zähnen (dick, dünn, dick) ist denkbar.

Den unterschiedlich ausgebildeten ersten und zweiten Zähnen entsprechend, kann auch eine Antriebskette, die mit den Zähnen in Eingriff gebracht wird, ausgebildet sein. Die Innen- und Außenlaschen der Kette sind auf die ersten und zweiten Zähne abgestimmt. Diese Abstimmung verlangt, dass die ersten Zähne stets in ein von Außenlaschen gebildetes Kettenglied eingreifen und die zweiten Zähne stets in ein von Innenlaschen gebildetes Kettenglied eingreifen. Dies gelingt nur, wenn der Kettenring eine gerade Gesamtzahl von Zähnen aufweist. Die Gesamtzahl der Zähne ergibt sich aus der addierten Anzahl von Zähnen des ersten und zweiten Segments. Unterschiedliche erste und zweite Zähne zusammen mit einer entsprechend abgestimmten Antriebskette verbessern die Verbindung zwischen Zähnen und Antriebskette und verringern das Risiko einer vom Kettenring abspringenden Kette bei Erschütterung. Im Wechsel unterschiedlich ausgebildete Zähne finden vor allem bei Antrieben mit nur einem einzigen Kettenring Anwendungen. Dort sind die Vorteile des verbesserten Ineinandergreifens besonders groß.

Besonders bevorzugt sind die Zähne, die im Bereich der Enden der Kettenring-Segmente (im Übergangsbereich) angeordnet sind, kleiner bzw. kürzer als die übrigen Zähne ausgebildet. Alternativ ist ein Übergangsbereich zwischen dem ersten und dem zweiten Segment sogar frei von ersten und zweiten Zähnen. Ein zahnfreier Übergangsbereich bzw. mit kleineren Zähnen wirkt sich positiv auf die Übertragung der Axialkraft F von der Kette auf die Segmente und damit auf die Beweglichkeit des gesamten Kettenrings aus. Der Kette wird mehr Raum für ein schräges Einlaufen im Übergangsbereich gegeben, was zu einer erhöhten Axialkraft F am Zahn führt.

Vorzugsweise sind das erste und das zweite Kettenring-Segment identisch ausgebildet. Die identische Ausbildung erleichtert die Fertigung der Segmente und spart Kosten und Zeit.

Allerdings ist die identische Ausbildung der Kettenring-Segmente mit alternierenden ersten und zweiten Zähnen nur möglich, wenn jedes Segment eine gerade Anzahl von Zähnen aufweist. Bei einer geraden Anzahl von Zähnen je Segment ist jeweils ein erster Zahn am Vorderende und ein zweiter Zahn am Rückende eines Segments angeordnet.

Segmente mit alternierenden ersten und zweiten Zähnen und einer ungeraden Zahnanzahl weisen jeweils gleiche Zähne an ihrem Vorder- und Rückende auf. Ein Segment mit beispielsweise 23 alternierenden ersten und zweiten Zähnen, das an seinem vorderen und hinteren Ende jeweils einen ersten, dicken Zahn aufweist, verlangt zwangsläufig nach einem benachbarten Segment, das auf den dicken Zahn folgend einen dünnen, also zweiten Zahn aufweist. Somit sind die Segmente, was die Reihenfolge der ersten und zweiten Zähne angeht, nicht identisch.

Es wäre denkbar, die Kettenring-Segmente auch über die Zahnreihenfolge hinausgehend unterschiedlich auszugestalten. Die Segmente könnten in Umfangsrichtung U unterschiedlich groß ausgebildet sein. Je nach Winkel der Tretkurbel werden die Tretkräfte unterschiedlich gut auf das Kettenblatt übertragen. An den Totpunkten wird keine Kraft übertragen. Die Segmentgrößen und damit die Übergänge zwischen benachbarten Segmenten könnten auf diese sich verändernden Kraftverhältnisse abgestimmt werden.

Vorzugsweise weist das erste und/oder zweite Kettenring-Segment ein Stützelement auf. Das Stützelement ist axial versetzt vom Vorderende des Segments angeordnet. Das Stützelement ist so angeordnet und ausgebildet, dass es mit einer ihm zugewandten Außenfläche der Antriebskette zusammenwirkt.

Je nachdem auf welcher Seite des Segments das Stützelement angeordnet ist, greifen die Laschen dieser Seite der Antriebskette zwischen den Zähnen und dem Stützelement ein. Die Außenseite einer sich im Schräglauf befindlichen Antriebskette stützt sich am Stützelement ab, so dass die Axialkraft F von der Antriebskette auf die Zähne und zusätzlich auf das Stützelement übertragen wird. Abhängig von der Richtung des Schräglaufs wirkt sowohl die Axialkraft F am Zahn, als auch am Stützelement in dieselbe Richtung und unterstützt die Axialbewegung des Segments. Wenn es der Bauraum erlaubt, wären Stützelemente auf beiden Seiten der Segmente besonders vorteilhaft, da unabhängig von der Richtung des Schräglaufs die Axialbewegung unterstützt würde. Meist ist der Bauraum zwischen Kettenring und Rahmen aber so beschränkt, dass lediglich eine Anbringung des Stützelements auf der äußeren Seite des Segments (also in Fahrtrichtung rechts vom Kettenring) möglich ist.

Vorzugsweise sind das erste Rückende des ersten Kettenring-Segments und das zweite Vorderende des zweiten Kettenring-Segments beweglich verbunden.

Somit sind das erste und zweite Segment jeweils an seinen Vorder- und Rückenden miteinander verbunden und bilden einen geschlossenen Kettenring aus zwei Segmenten. Bei Ausführungsformen mit mehr als zwei Segmenten greifen das vordere und hintere Ende eines Segments jeweils in unterschiedliche benachbarte Segmente ein.

Das Funktionsprinzip eines Kettenrings mit beweglich verbundenen Segmenten besteht unabhängig von der Anzahl der Kettensegmente. Neben zwei Segmenten sind auch mehrere miteinander verbundene Kettenring-Segmente gleicher oder unterschiedlicher Größe denkbar. Besonders bevorzugt ist die Unterteilung in sechs gleiche Segmente. Ausführungsformen mit vielen Segmenten führen dazu, dass je Kurbelumdrehung viele kleine Schritte in axialer Richtung vollzogen werden. Jeweils beim Einlaufen eines Segments wird ein solcher Schritt vollzogen. Im Falle von sechs Segmenten ergibt das je Kurbelumdrehung sechs kleine Schritte, deren Schrittweite in axialer Richtung durch die Größe des Axialspiels zwischen benachbarten Segmenten definiert ist.

Grundsätzlich ist die erfindungsgemäße Ausgestaltung des Kettenrings nicht auf kreisrunde Ausführungen beschränkt. Auch ovale bzw. elliptische Kettenringe, bestehend aus zwei oder mehreren Segmenten, wären denkbar. Solche nicht-runden Kettenringe wirken dem Umstand entgegen, dass bedingt durch die Totpunkte, der Radfahrer nicht in jeder Kurbelposition die gleiche Kraft auf das Pedal bringt.

Die Erfindung betrifft weiterhin eine Kettenringanordnung für eine Tretkurbelanordnung eines Fahrrades. Die Kettenringanordnung weist einen erfindungsgemäßen Kettenring und einen Stern auf. Der Stern ist dazu geeignet drehbar um die Rotationsachse A befestigt zu werden. Der Stern ist weiter dazu ausgebildet, den Kettenring drehmomentübertragend mit der Tretkurbel zu verbinden, wobei der Kettenring beweglich am Stern gelagert ist, um eine Bewegung des Kettenrings relativ zu dem Stern in Richtung der Rotationsachse A zu ermöglichen.

Der Stern kann dabei entweder einstückig mit der Tretkurbel ausgebildet oder als separates Teil mit der Tretkurbel drehmomentübertragend verbunden sein.

Wenn die Kettenringanordnung an der Tretkurbel montiert ist, dreht sich die Tretkurbel zusammen mit dem Stern und dem Kettenring um die Rotationsachse A, die der Achse des Tretlagers entspricht. Der Stern ist um die Achse A drehbar gelagert, aber ansonsten in alle anderen Richtungen festgelegt. Dahingegen ist der Kettenring sowohl um die Rotationsachse A drehbar, als auch entlang dieser Achse A beweglich gelagert. Der Kettenring steht mit dem Stern in drehmomentübertragendem Eingriff. Somit dreht sich der Kettenring zusammen mit dem Stern und kann sich relativ zum Stern in axialer Richtung bewegen. Die Axialbewegung der Segmente bzw. des gesamten Kettenrings gegenüber dem Stern ist im Wesentlichen eine Linearbewegung entlang der Rotationsachse A.

Die bewegliche Lagerung des Kettenrings am Stern kann unterschiedlich gelöst werden. Sowohl die Anzahl der Lagerstellen, als auch die Art der Lagerung kann variieren und liegt im Ermessen des Fachmanns. Für eine stabile Lagerung sind zwei oder mehr Lager je Segment vorgesehen. Allgemein gesprochen handelt es sich bei der Lagerung um eine Verbindung zwischen dem Kettenring-Segment und dem Stern mit zumindest einem Freiheitsgrad in Richtung der Rotationsachse A. Die Lagerung weist dafür üblicherweise Lagerelemente am Kettenring-Segment und Gegenlager am Stern auf. Die Lagerelemente am Segment wirken mit den Gegenlagern am Stern zusammen, so dass sich die Segmente gegenüber dem Stern in axialer Richtung bewegen können.

Vorzugsweise weisen das erste und zweite Kettenring-Segment jeweils ein erstes Lagerelement auf. Besonders vorteilhaft ist die Anordnung des ersten Lagerelements in Umfangrichtung U im Bereich des Vorderendes, insbesondere im vorderen Bereich des Vorderendes des Kettenring-Segments. Vorzugsweise ist das erste Lagerelement als Öffnung, Führungsfläche oder Bolzen ausgebildet.

Besonders bevorzugt weisen das erste und zweite Kettenring-Segment jeweils ein zweites Lagerelement auf. Besonders vorteilhaft ist die Anordnung des zweiten Lagerelements in Umfangsrichtung U in einem Bereich zwischen dem Rückende und einem mittleren Abschnitt des Kettenring-Segments. Vorzugsweise ist das zweite Lagerelement als Öffnung, Führungsfläche oder Bolzen ausgebildet.

Ein als Führungsfläche ausgebildetes erstes und/oder zweites Lagerelement ist vorzugsweise auf einer inneren Umfangsfläche des Kettenring-Segments angeordnet.

Vorzugsweise weist der Stern einen ersten Arm und einen dritten Arm mit jeweils einem ersten Gegenlager auf. Vorzugsweise ist das erste Gegenlager als Öffnung, Führungsfläche oder Bolzen ausgebildet.

Besonders bevorzugt weist der Stern einen zweiten Arm und einen vierten Arm mit jeweils einem zweiten Gegenlager auf. Vorzugsweise ist das zweite Gegenlager als Öffnung, Führungsfläche oder Bolzen ausgebildet.

Vorzugsweise ist das erste Lagerelement am Kettensegment als Öffnung ausgebildet und wirkt mit dem als Bolzen ausgebildeten ersten Gegenlager am Stern zusammen. Selbstverständlich kann auch umgekehrt der Bolzen am Kettenring-Segment und die Öffnung am Stern ausgebildet sein.

Um die Bewegung des Kettenring-Segments und damit des Kettenrings relativ zum Stern in Richtung der Rotationsachse A zu erlauben, ist ein Durchmesser des Bolzens geringer als ein Durchmesser der Öffnung bemessen. Das durch die unterschiedlich großen Durchmesser erzeugte Spiel zwischen Bolzen und Öffnung ermöglicht eine Relativbewegung zwischen Segment und Stern.

Vorzugsweise weist die Öffnung eine Schräge auf. Die Schräge erlaubt ein Verkippen des Kettenring-Segments und damit des Kettenrings relativ zum Stern.

Die Kippbewegung des Segments gegenüber dem Stern unterstützt und beschleunigt die Axialbewegung des Kettenrings entlang der Rotationsachse A und damit das Erreichen der idealen Kettenlinie. Der Schräglauf der Antriebskette führt sowohl zum Verkippen des Segments um den Bolzen des Sterns, als auch zur axialen Verschiebung entlang des Bolzens.

Vorzugsweise ist das zweite Lagerelement am Kettenring-Segment als Führungsfläche ausgebildet und wirkt mit dem ebenfalls als Führungsfläche ausgebildeten zweiten Gegenlager am Stern zusammen. Dabei bewegt sich die Führungsfläche des Kettenblatt-Segments entlang der Führungsfläche des Sterns in Richtung der Rotationsachse A.

Für eine stabile Lagerung weist ein Kettenring-Segment jeweils zwei Lagerelemente auf, die mit jeweils zwei Gegenlagern am Stern zusammenwirken. Dabei kann es sich um zwei gleich ausgebildete Lagerelemente am Segment, wie z. B. zwei Öffnungen handeln, die mit zwei Gegenlagern am Stern, z. B. zwei Bolzen zusammenwirken. Die beiden Lagerelemente und ihre Gegenlager können aber auch unterschiedlich ausgebildet sein.

Vorzugsweise weist die Kettenringanordnung einen einzigen Kettenring auf. Bei einer Kettenringanordnung mit lediglich einem Kettenring (Einzelkettenring) verfügt die hintere Mehrfach-Ritzelanordnung üblicherweise über eine erhöhte Anzahl von Ritzeln. Die hohe Anzahl der Ritzel stellt sicher, dass dem Fahrradfahrer genügend Gänge zur Auswahl stehen. Gleichzeitig führt die hohe Ritzelanzahl aber auch zu einer Verbreiterung der Mehrfach-Ritzelanordnung und einem damit verbundenen erhöhten Schräglauf der Kette. Gerade bei solchen Anordnungen ist der erfindungsgemäße Kettenring zum Ausgleich des Schräglaufs von großer Bedeutung.

Die Erfindung betrifft weiterhin eine Antriebsanordnung für ein Fahrrad. Die Antriebsanordnung weist eine erfindungsgemäße Kettenringanordnung, eine Mehrfach-Ritzelanordnung für eine Hinterradnabe, eine Antriebskette und ein Schaltwerk auf. Die Antriebskette ist zum Eingreifen in den erfindungsgemäßen Kettenring der Kettenringanordnung und in ein Ritzel der Mehrfach-Ritzelanordnung ausgebildet. Die Antriebskette ist weiter zum Übertragen einer Antriebskraft Z von der Kettenringanordnung auf die Mehrfach-Ritzelanordnung ausgebildet. Das Schaltwerk ist zur Positionierung der Antriebskette auf einem der Ritzel der Mehrfach-Ritzelanordnung ausgebildet, wobei sich der Kettenring der Kettenringanordnung mit der Position der Antriebskette auf der Mehrfach-Ritzelanordnung entlang der Rotationsachse (A) ausrichtet.

Die Position der Kette auf der hinteren Mehrfach-Ritzelanordnung hängt von der Wahl des Übersetzungsverhältnisses bzw. des Ganges ab. Je nachdem welches Ritzel der Mehrfach-Ritzelanordnung gewählt wurde, verändert sich die Position der Kette in axialer Richtung. Entsprechend ändern sich die Kettenlinie und der Kettenschräglauf. Abhängig von der Position der Kette auf der hinteren Mehrfach-Ritzelanordnung richtet sich der vordere Kettenring entlang seiner Rotationsachse A aus. Damit wird der Schräglauf der Kette ausgeglichen.

Vorzugsweise geschieht die Ausrichtung des Kettenrings selbsttätig entlang aufgrund der durch den Schräglauf der Antriebskette übertragenen Axialkraft F. Je größer der Schräglauf der Kette, desto größer die Axialkraft F. Umgekehrt nimmt die von der Kette auf den Kettenring wirkende Axialkraft F zusammen mit dem abnehmenden Schräglauf ab. Der Kettenring bewegt sich solange entlang der Rotationsache A, bis der Schräglauf der Antriebskette ausgeglichen und eine annähernd ideale Kettenlinie hergestellt ist. Zusätzliche Betätigungselemente zum aktiven Verschieben des Kettenrings bzw. seiner Segmente werden nicht benötigt.

Grundsätzlich ist es jedoch möglich, den Kettenring mittels solcher zusätzlichen Betätigungsmittel aktiv auszurichten. Dabei sind sowohl mechanische, elektrische, elektronische, elektromechanische, pneumatische, als auch hydraulische Betätigungssysteme denkbar. Diese Betätigungsmittel können sowohl manuell, als auch automatisch gesteuert werden. Im Rahmen von elektronischen Fahrradschaltungen, wie sie beispielsweise aus der DE 10 2013 015 946 A1 bekannt sind, bietet es sich an, Elektromotoren als Betätigungsmittel zum aktiven Ausrichten der Kettenring-Segmente zu nutzen. Die Elektromotoren können sowohl manuell vom Fahrer, als auch automatisch gesteuert werden. Eine automatisierte Steuerung könnte auf Sensoren beruhen, die die Position der Kette auf der Kassette detektiert und ein entsprechendes Signal an die Steuerung der Betätigungsmittel des Kettenrings sendet, welche diesen entsprechend ausrichtet. Es wäre auch denkbar, dass Sensoren den Schräglauf der Kette bzw. deren Axialkraft messen und die Ausrichtung entsprechend gesteuert wird. Eine solche aktive Anordnung wäre zwar komplizierter und teurer als die selbsttätige Ausrichtung des Kettenrings, hätte aber den Vorteil, dass auch sehr geringe Abweichungen zur idealen Kettenlinie ausgeglichen werden könnten; im Falle der automatischen Steuerung sogar ohne das Zutun des Fahrradfahrers.

Vorzugsweise weist die Mehrfach-Ritzelanordnung der Antriebsanordnung zumindest elf Ritzel auf. Besonders bevorzugt weist die Mehrfach-Ritzelanordnung zwölf oder dreizehn Ritzel auf.

Aber auch Mehrfach-Ritzelanordnungen mit einer geringeren oder auch größeren Anzahl von unterschiedlich großen Ritzeln sind denkbar. Je nach Einsatzgebiet können die Sprünge zwischen benachbarten Ritzeln und damit auch zwischen verschiedenen Übersetzungsverhältnissen mehr oder weniger groß sein. Gerade bei Antrieben für geländegängige Fahrräder sind große Spreizungen, d. h. eine große Differenz zwischen der Zahnanzahl des kleinsten und des größten Ritzels von Bedeutung, um passende Übersetzungsverhältnisse für Berg- und Talfahrten bereitzustellen.

Besonders bevorzugt weist die Mehrfach-Ritzelanordnung der Antriebsanordnung wenigstes ein Ritzel mit alternierenden und sich unterscheidenden ersten und zweiten Zähnen auf. Die ersten und zweiten Zähne des Ritzels unterscheiden sich insbesondere in Form und/oder Dimension voneinander.

Ähnlich wie die ersten und zweiten Zähne des Kettenrings können sich die Zähne hinsichtlich ihrer Dicke, Länge, Symmetrie, Fasen usw. unterscheiden. Die Zähne sind so ausgebildet, dass zum einen die Kettenführung verbessert wird, aber zum anderen auch ein leichtgängiges Schalten zwischen benachbarten Ritzeln möglich ist.

### Kurzbeschreibunq der Erfindung

- Fig. 1: Fahrrad mit einer erfindungsgemäßen Antriebsanordnung
- Fig. 2: Schematische Darstellung zur Verdeutlichung der erfindungsgemäßen Aufgabe
- Fig. 3: Ansicht des erfindungsgemäßen Kettenrings
- Fig. 4a: Perspektivische Ansicht des erfindungsgemäßen Kettenrings in Eingriff mit einer Antriebskette mit zueinander ausgerichteten Segmenten
- Fig. 4b: Perspektivische Ansicht des erfindungsgemäßen Kettenrings in Eingriff mit einer Antriebskette mit zueinander verschobenen Segmenten
- Fig. 5a: Außenansicht des Sterns der erfindungsgemäßen Kettenringanordnung
- Fig. 5b: Perspektivische Innenansicht des Sterns aus Fig. 5a
- Fig. 6a: Außenansicht der erfindungsgemäßen Kettenringanordnung
- Fig. 6b: Innenansicht der erfindungsgemäßen Kettenringanordnung aus Fig. 6a
- Fig. 7: Kettenringanordnung mit montierter Tretkurbel im Eingriff mit der Antriebskette
- Fig. 8: Darstellung zur Verdeutlichung der Kippbewegung
- Fig. 9a: Außenansicht einer zweiten Ausführungsform der erfindungsgemäßen Kettenringanordnung mit montierter Tretkurbel
- Fig. 9b: Innenansicht der Kettenringanordnung aus Fig. 9a
- Fig. 9c: Schnittansicht der Kettenringanordnung aus Fig. 9a entlang der Linie C-C
- Fig. 9d: Schnittansicht der Kettenringanordnung aus Fig. 9a entlang der Linie D-D
- Fig. 9e: Vergrößerte Detailansicht aus der Fig. 9c
- Fig.10a: Außenansicht einer dritten Ausführungsform der erfindungsgemäßen Kettenringanordnung mit montierter Tretkurbel
- Fig.10b: Perspektivische Außenansicht der Kettenringanordnung aus Fig. 10a
- Fig.10c: Perspektivische Innenansicht der Kettenringanordnung aus Fig. 10b

### Detaillierte Beschreibung der bevorzugten Ausführungsformen

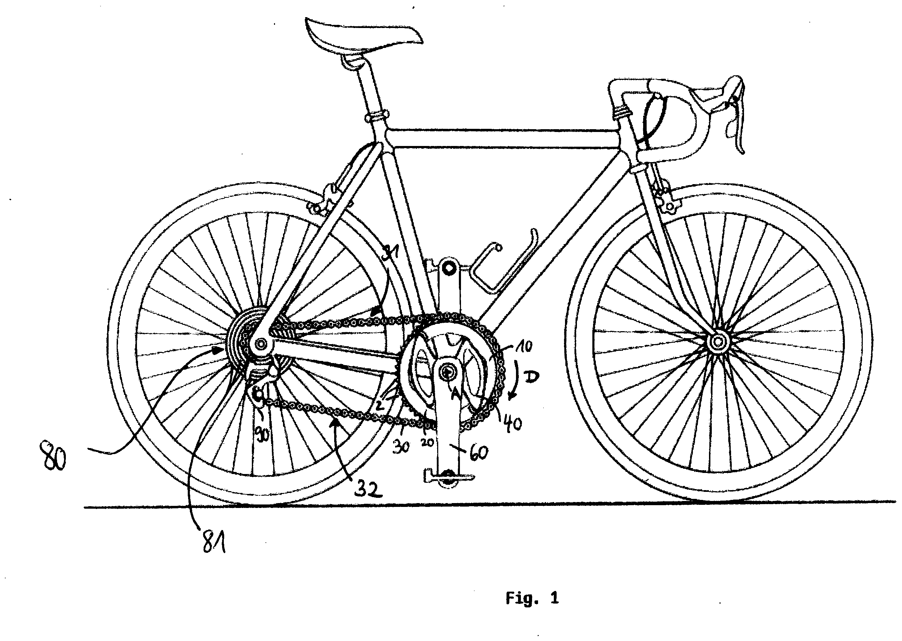

Figur 1 zeigt ein Fahrrad mit einer erfindungsgemäßen Antriebsanordnung. Die im Folgenden verwendeten Richtungsangaben oben/unten und hinten/vorne beziehen sich auf ein Fahrrad bzw. dessen Antrieb in Fahrtrichtung gesehen. Die Richtungsangaben innen/außen beziehen sich auf den am Fahrradrahmen montieren Antrieb und beschreiben, wo die Antriebselemente relativ zum Fahrradrahmen angeordnet sind. So ist zum Beispiel an der hinteren Mehrfach-Ritzelanordnung 80 das kleinste Ritzel weiter außen als die benachbarten größeren Ritzel angeordnet und umgekehrt das größte Ritzel weiter innen als die benachbarten kleineren Ritzel. Die Richtungsangabe axial bezieht sich auf die Rotationsachse A des Kettenrings und der gesamten Tretkurbelanordnung. Zum Antreiben des Fahrrades wird die Tretkurbel 60 im Uhrzeigersinn um die Rotationsachse A in Drehrichtung D gedreht. Die Richtungsangabe radial außen und radial innen beschreibt den Abstand von der Rotationsachse A in radialer Richtung. Die Umfangsrichtung U bezieht sich auf den Umfang des Kettenrings.

Die Tretkurbel 60 ist mit dem Stern 40 drehmomentübertragend verbunden. Der einzelne vordere Kettenring weist zwei Segmente 10, 20 auf und ist relativ zum Stern 40 entlang der Rotationsachse A (in axialer Richtung A) beweglich. Die Segmente 10, 20 weisen radial außen entlang ihrer Umfangs eine Vielzahl von Zähnen 2 auf, die mit der Antriebskette 30 in Eingriff stehen. Die vordere Tretkurbelanordnung ist mittels der Antriebskette 30 kraftübertragend mit der hinteren Mehrfach-Ritzelanordnung 80 verbunden, so dass sich das durch die Tretkraft eines Fahrers erzeugte Drehmoment auf das Hinterrad des Fahrrads übertragen lässt. Die Antriebskette 30 lässt sich mit Hilfe des Schaltwerks 90 zwischen benachbarten Ritzeln 81 der Mehrfach-Ritzelanordnung 80 hin und her bewegen. Die Antriebskette 30 stellt einen geschlossenen Kreis dar, der im oberen Bereich eine Zugkraft zwischen dem vorderen Kettenring und einem hinteren Ritzel 81 überträgt. Dieser Bereich der Kette 30 steht unter Zug bzw. Last und wird auch Lasttrum oder Zugtrum 31 genannt. Der untere Teil der Kette 30 hingegen steht nicht unter Zug bzw. Last und wird auch Leertrum genannt 32.

Selbstredend ist der erfindungsgemäße Antrieb nicht nur für ein dargestelltes Straßenrad geeignet, sondern kann an einer Vielzahl von Radtypen, wie Mountainbikes, Tourenräder oder E-Bikes zum Einsatz kommen.

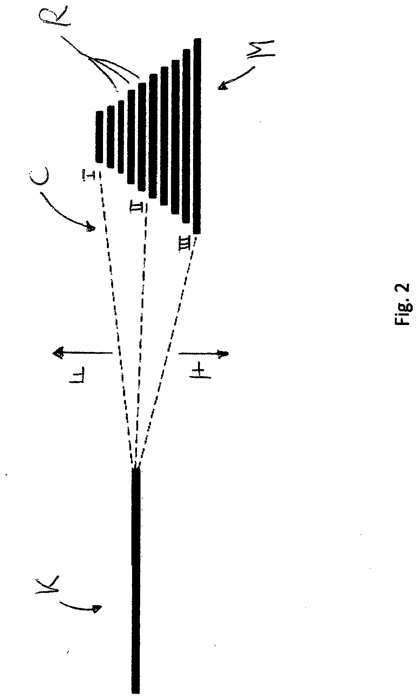

Figur 2 ist eine schematische Darstellung eines herkömmlichen Fahrradantriebs und dessen Kettenlinien in drei verschiedenen Schaltpositionen in der Draufsicht. Die Darstellung dient der Verdeutlichung der erfindungsgemäßen Aufgabe. Der herkömmliche Fahrradantrieb umfasst ein vorderes einzelnes Kettenblatt K, das axial festgelegt ist, eine hintere Mehrfach-Ritzelanordnung M mit 10 benachbarten Ritzeln R unterschiedlicher Größe und eine das vordere Kettenblatt K mit einem der hinteren Ritzel R verbindende Kette C. Die gestrichelte Linie stellt die Kette C bzw. deren Kettenlinie dar. Die Kette C kann mittels eines hier nicht dargestellten hinteren Schaltwerks von einem zum anderen Ritzel R bewegt und je nach Bedarf auf der Mehrfach-Ritzelanordnung M positioniert werden. Das Übersetzungsverhältnis des Antriebs ändert sich entsprechend der Position der Kette C auf der Mehrfach-Ritzelanordnung M. Damit einhergehend ändert sich auch die Kettenlinie.

Wie eingangs beschrieben stellt die Kettenlinie den Verlauf der Kette zwischen dem vorderen Kettenblatt und dem hinteren Ritzel dar. Idealerweise liegen Kettenblatt und Ritzel in einer Flucht, so dass die Kettenlinie gerade verläuft und eine optimale Kraftübertragung mit dem höchsten Wirkungsgrad und dem geringsten Verschleiß möglich ist. Figur 2 zeigt die Kette C in drei verschiedenen Positionen mit den entsprechenden Kettenlinien:
I. Die Kette C ist in Eingriff mit dem kleinsten Ritzel R. Die Kette C befindet sich im Schräglauf. Die Kettenlinie verläuft vom Kettenblatt K schräg nach außen. Von der Kette C wirkt eine Axialkraft F nach außen auf das Kettenblatt K.
II. Die Kette C ist in Eingriff mit einem mittleren Ritzel R. Die Kettenlinie verläuft gerade zwischen dem vorderen Kettenblatt K und dem hinteren Ritzel R und ist somit ideal - gewünschte Kettenlinie, kein Schräglauf. Es wirken keine Axialkräfte F.
III. Die Kette C ist in Eingriff mit dem größten Ritzel R. Die Kette C befindet sich im Schräglauf. Die Kettenlinie verläuft vom Kettenblatt K schräg nach innen. Von der Kette C wirkt eine Axialkraft F nach innen auf das Kettenblatt K.

Befindet sich die Kette zwischen den oben beschriebenen Positionen, kommt es zu einem entsprechend geringeren Schräglauf mit geringeren Axialkräften.

Da sich die Kette aufgrund des vorderen Einzelkettenblatts axial nicht bewegt, hängt die Kettenlinie allein von der Position auf den hinteren Ritzeln ab. Der in Position I und III vorhandene Schräglauf wirkt sich nachteilig auf den Wirkungsrad der Kraftübertragung zwischen Kettenblatt und Ritzel, den Verschleiß und die Geräuschbildung aus und soll vermieden werden. Je größer der Schräglauf, desto größer sind die entsprechenden Nachteile. Die steigende Anzahl von Ritzeln und die damit einhergehende Verbreiterung der Mehrfach-Ritzelanordnung führt dazu, dass die Kette in ihren Extremstellungen am kleinesten und am größten Ritzel einen noch größeren Schräglauf erfährt. Die Breite der Mehrfach-Ritzelanordnung wird aber nicht nur durch die Anzahl der Ritzel bestimmt, sondern auch durch die Materialstärke der Ritzel. So sind die Ritzel für ein mit einem Elektromotor betriebenes Fahrrad in der Regel breiter und stabiler ausgestaltet, was ebenfalls in einem großen Schräglauf in den Extremstellungen resultiert.

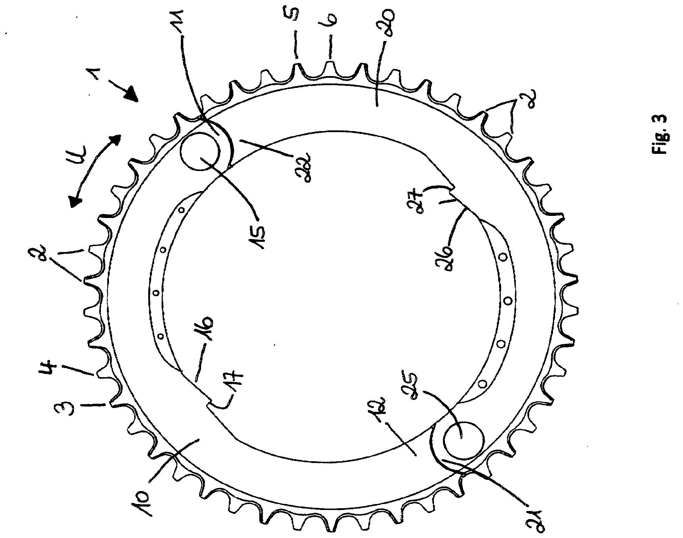

Figur 3 zeigt den erfindungsgemäßen Kettenring 1 mit einem ersten Kettenring-Segment 10 und einem zweiten Kettenring-Segment 20. Die Segmente 10, 20 sind an ihren Enden beweglich miteinander verbunden. Dabei steht das erste Vorderende 11 des ersten Segments 10 mit dem zweiten Rückende 22 des zweiten Segments 20 in Eingriff. Weiter steht auch das zweite Vorderende 21 des zweiten Segments 20 mit dem ersten Rückende 12 des ersten Segments 10 in Eingriff. Somit bilden die beiden Segmente 10, 20 einen geschlossenen Kettenring 1.

Die Kettenring-Segmente 10, 20 weisen jeweils an ihren Vorderenden 11, 21 Öffnungen 15, 25 auf. An ihren inneren Umfängen sind Führungsflächen 16, 26 und in die Umfangsrichtung U wirkende Anschläge 17, 27 ausgebildet. Die Öffnungen 15, 25, Führungsflächen 16, 26 und die Anschläge 17, 27 sind ausgebildet, um in einem montierten Zustand mit einem hier nicht dargestellten Stern 40 zusammenzuwirken.

Der Kettenring 1 bzw. seine Segmente 10, 20 weisen eine Vielzahl von Zähnen 2 auf, die sich in Umfangsrichtung U entlang eines äußeren Umfangs des Kettenrings 1 nach radial außen erstrecken. Die Vielzahl von Zähnen 2 besteht aus ersten Zähnen 3, 5 und zweiten Zähnen 4, 6, wobei die ersten Zähne 3, 5 im Vergleich zu den zweiten Zähnen 4, 6 dicker ausgebildet sind. Das erste und zweite Segment 10, 20 weisen jeweils abwechselnd dicke Zähne 3, 5 und dünne Zähne 4, 6 auf. Die Gesamtzahl der Vielzahl von Zähnen 2 ist eine gerade Anzahl von Zähnen, im dargestellten Ausführungsbeispiel weist der Kettenring 1 46 Zähne auf. Damit entfallen auf jedes Segment 10, 20 eine ungerade Anzahl von 23 Zähnen, was dazu führt, dass sich die Segmente 10, 20 hinsichtlich der Reihenfolge von ersten Zähnen 3, 5 und zweiten Zähnen 4, 6 unterscheiden. Das erste Segment 10 weist an seinem Vorderende 11 und an seinem Rückende 12 jeweils einen ersten, dicken Zahn 3 als Abschlusszahn auf. Um eine alternierende Folge von dicken und dünnen Zähnen aufrechtzuerhalten, weist das zweite Segment 20 entsprechend an seinem Vorderende 21 und seinem Rückende 22 jeweils einen zweiten, dünnen Zahn 6 auf. Abgesehen von der Zahnfolge unterscheiden sich die Kettenring-Segmente 10, 20 nicht.

Bei einem Kettenring mit beispielsweise 48 Zähnen, würde jeweils eine gerade Anzahl von 24 Zähnen auf die beiden Segmente entfallen. Das hätte zur Folge, dass beide Segmente auch hinsichtlich der Zahnfolge identisch wären. Beide Segmente könnten an ihrem vorderen Ende einen ersten (dicken) Zahn und an ihrem hinteren Ende einen zweiten (dünnen) Zahn aufweisen. Die alternierende Abfolge von ersten und zweiten Zähnen in Umfangsrichtung des Kettenrings wäre gegeben. Die vereinfachte Fertigung von identisch ausgebildeten Segmenten ist ein Vorteil, weil nur noch eine Form oder ein Werkzeug benötigt wird.

Ein Kettenring mit mehr als zwei Segmenten wäre ebenfalls denkbar. Der Aufbau eines solchen Kettenrings würde dem obigen aber weitestgehend entsprechen. Die Segmente könnten ebenfalls identisch ausgebildet sein und wären an ihren Enden mit jeweils benachbarten Segmenten verbunden.

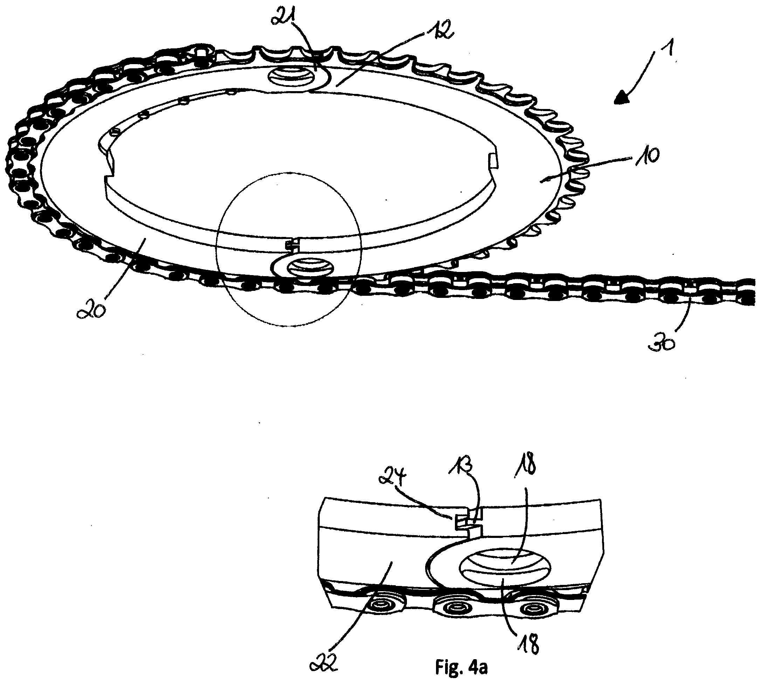

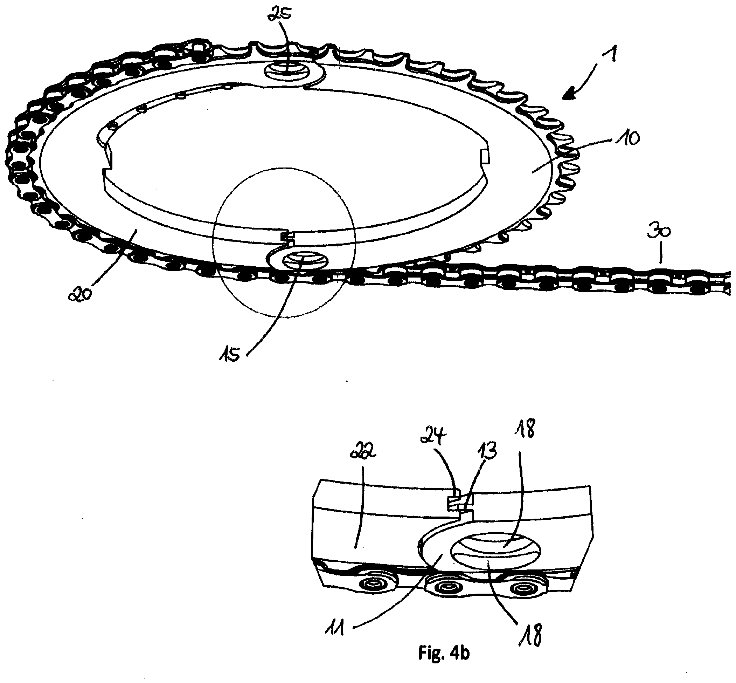

Figur 4a und 4b zeigen perspektivische Ansichten des erfindungsgemäßen Kettenrings zusammen mit jeweils einer vergrößerten Detailansicht in verschiedenen Stellungen der Segmente - einmal zueinander ausgerichtet und einmal zueinander verschoben. Sie verdeutlichen die Beweglichkeit der Kettenring-Segmente 10, 20 relativ zueinander. Da der Kettenring 1 vorzugsweise durch eine Axialkraft F der Kette 30 in axialer Richtung bewegt wird, ist ein Teil der Kette 30 in Eingriff mit der Vielzahl von Zähnen 2 dargestellt. Zur verbesserten Darstellung der Segmente ist der obere Teil der Kette 30 nicht dargestellt.

Figur 4a zeigt den Kettenring 1, wobei die beiden Kettenring-Segmente 10, 20 in einer Linie zueinander ausgerichtet sind. Die vergrößerte Detailansicht zeigt das Vorderende 11 des ersten Segments 10, welches beweglich mit dem Rückende 22 des zweiten Segments 20 verbunden ist. Dabei greift der Vorsprung 13 des ersten Segments 10 in eine Vertiefung 14 des zweiten Segments 20 ein und ist mittig zu diesem positioniert. Die Segmente 10, 20 verbleiben in dieser zueinander ausgerichteten Stellung, solange die gewünschte Kettenlinie beibehalten wird, also keine oder eine nur sehr geringe Axialkraft F von der Kette 30 auf die Vielzahl von Zähnen 2 der Segmente 10, 20 wirkt.

Sobald sich die Kette 30 aufgrund eines Gangwechsels an der hinteren Mehrfach-Ritzelanordnung im Schräglauf befindet, verlässt sie die ideale Kettenlinie. Im Schräglauf wirkt eine Axialkraft F von der Kette 30 auf die Vielzahl von Zähnen 2 des Kettenrings 1 bzw. der Kettenring-Segmente 10, 20. In dem in Figur 4b gezeigten Fall verschiebt sich das erste Segment 10 relativ zum zweiten Segment 20 nach innen auf den Fahrradradrahmen zu. Das lässt darauf schließen, dass sich die Kette 30 im Schräglauf nach innen befindet, also von einem kleineren auf ein größeres Ritzel geschalten wurde. Aufgrund dessen wird eine Axialkraft F von der Kette 30 auf die Segmente 10, 20 übertragen, welche diese ebenfalls nach innen bewegt.

Diese Bewegung wird in Schritten ausgeführt, wobei sich die Segmente 10, 20 je nach Kurbelumdrehung relativ zueinander verschieben. Jeder Bewegungsschritt ist durch die Abmessungen des Vorsprungs 13 gegenüber der Aussparung 24 definiert und begrenzt. Je größer das Axialspiel zwischen Vorsprung 13 und Aussparung 24, desto größer ist die Relativbewegung der Segmente pro Kurbelumdrehung.

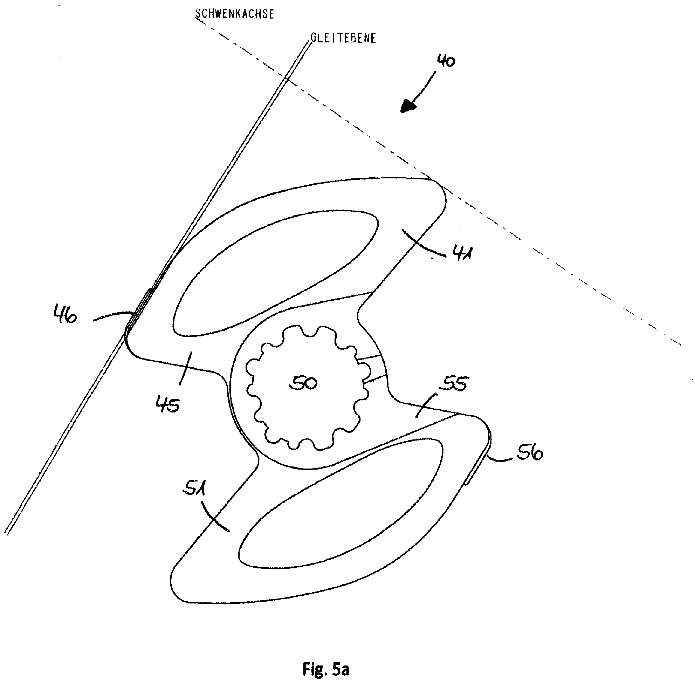

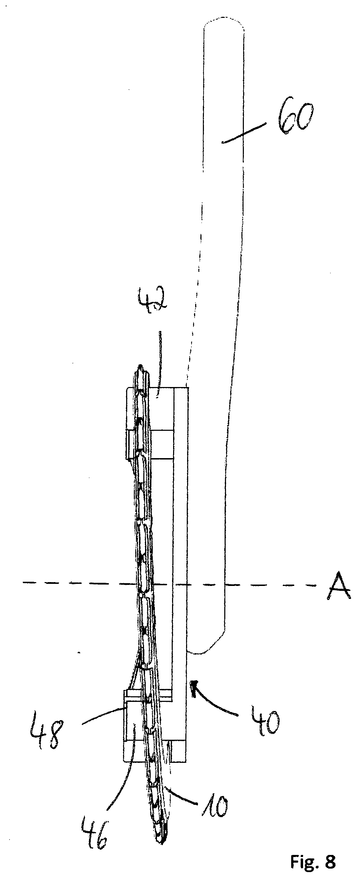

Figur 4b zeigt weiterhin die Öffnungen 15, 25 in den Segmenten 10, 20. Die Öffnungen 15, 25 weisen an ihren Außenflächen Schrägen 18, 28 auf, die im montierten Zustand ein Verkippen der Segmente 10, 20 gegenüber dem Stern 40 erlauben. Vor allem die in den vergrößerten Detailansichten gezeigten Schrägen 18 an der radial außen liegenden Außenfläche der Öffnungen sind für das Verkippen von Bedeutung. Die entsprechende Kipp- bzw. Schwenkachse ist in Figur 5a eingezeichnet und zeigt die Achse, um welche das erste Segment 10 gegenüber dem Stern 40 verkippt. Siehe zur Kippbewegung auch Figur 8.

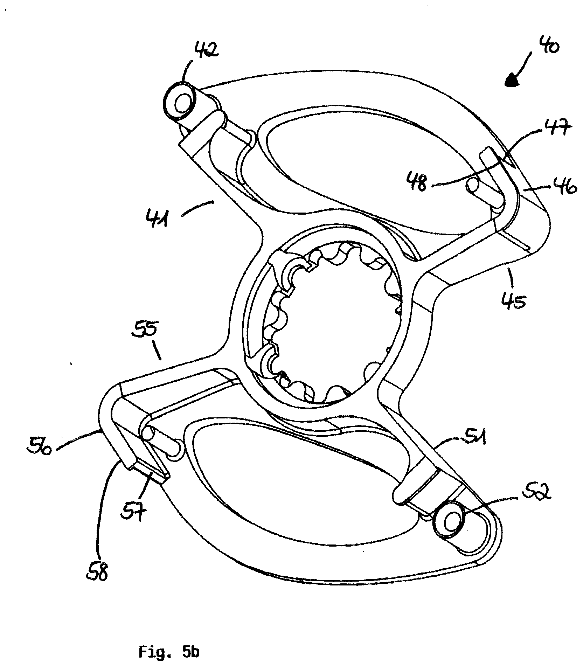

Figur 5a und 5b zeigen eine Außen- und Innenansicht des Sterns 40. Der Stern 40 weist einen ersten Arm 41 mit einem Bolzen (nicht zu sehen) und einen zweiten Arm 45 mit einer Führungsfläche 46 auf. Weiter weist der Stern 40 einen dritten Arm 51 mit einem Bolzen (nicht zu sehen) und einen vierten Arm 55 mit einer Führungsfläche 56 auf. Der Stern 40 verfügt über eine Aufnahme 50 für eine Tretkurbel, die es erlaubt, die Tretkurbel drehmomentübertragend mit dem Stern 40 zu verbinden. Im dargestellten Beispiel sind jeweils der erste und zweite Arm 41, 45 und dritte und vierte Arm 51, 55 miteinander verbunden. Diese Verbindung der Arme trägt zur Steifigkeit und damit zur Stabilität des Sterns 40 bei, ist aber nicht zwingend notwendig.

Figur 5b zeigt die Bolzen 42, 52, die dafür ausgelegt sind, in montiertem Zustand in die Öffnungen der hier nicht gezeigten Segmente einzugreifen. Auch die axialen Anschläge 48, 58 und die Führungsflächen 46, 56 sind in dieser Ansicht gut zu erkennen. In montiertem Zustand gleiten die Segmente mit ihren Führungsflächen entlang der Führungsflächen 46, 56 (siehe Gleitebene in Figur 5a). Die axialen Anschläge 48, 58 begrenzen die Axialbewegung und verhindern, dass die Segmente vom Stern 40 abfallen.

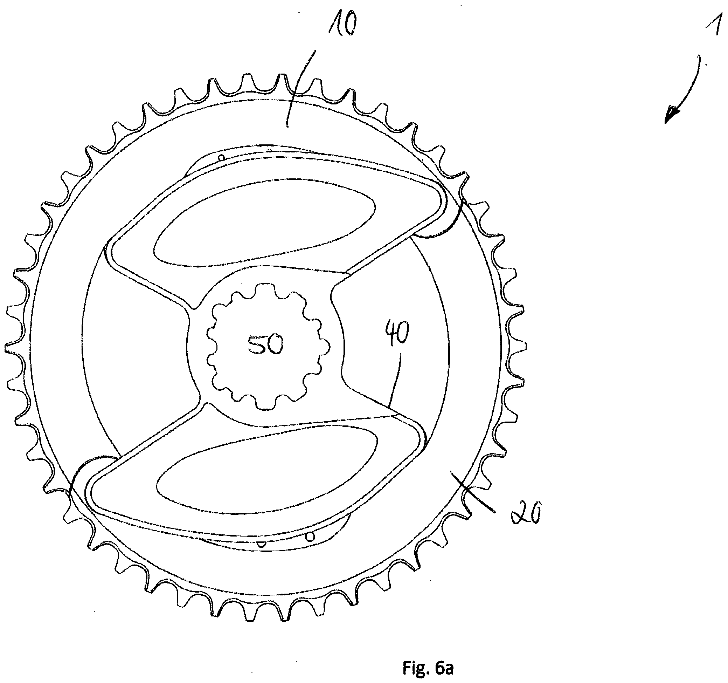

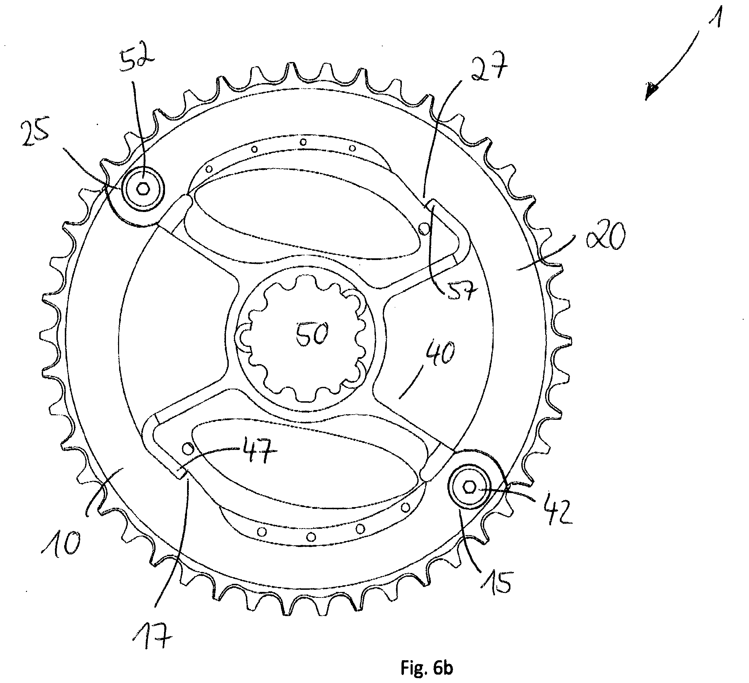

Figur 6a und 6b zeigen eine Außen- und Innenansicht der erfindungsgemäßen Kettenringanordnung, bestehend aus dem Kettenring 1 mit einem ersten und zweiten Segment 10, 20 und dem Stern 40. Die Segmente 10, 20 greifen an ihren Enden ineinander und sind am Stern 40 montiert, d. h. die Bolzen des Sterns 40 greifen in die Öffnungen der Segmente ein und die Führungsflächen der Segmente wirken mit den Führungsflächen des Sterns 40 zusammen. Der Stern 40 weist mittig eine Aufnahme 50 für eine Tretkurbel auf. Im gezeigten Ausführungsbespiel weist die Aufnahme 50 eine umlaufende Verzahnung auf, die mit einer entsprechenden Verzahnung an der Tretkurbel drehmomentübertragend in Eingriff gebracht werden kann.

In der Innenansicht in Figur 6b ist zu sehen, wie die Bolzen 42, 52 des Sterns 40 in die Öffnungen 15, 25 der Segmente 10, 20 eingreifen und so eine drehmomentübertragende Verbindung zwischen Stern 40 und den Segmenten 10, 20 herstellen. Die Segmente 10, 20 liegen mit ihren Führungsflächen 16, 26 entlang ihres inneren Umfangs auf den Führungsflächen 46, 56 des Sterns 40 auf und können sich entlang dieser in der Gleitebene bewegen. In Umfangsrichtung wirken die Anschläge 17, 27 der Segmente 10, 20 jeweils mit den Anschlägen 47, 57 des Sterns 40 zusammen und stellen die Drehmomentübertragung in Drehrichtung D des Antriebs sicher.

Vorzugsweise ist jedes Segment an zumindest zwei Stellen des Sterns 40 gelagert. Die Lagerung kann aber auch anders als im dargestellten Beispiel realisiert werden, solange sie eine Relativbewegung des Segments gegenüber dem Stern 40 erlaubt.

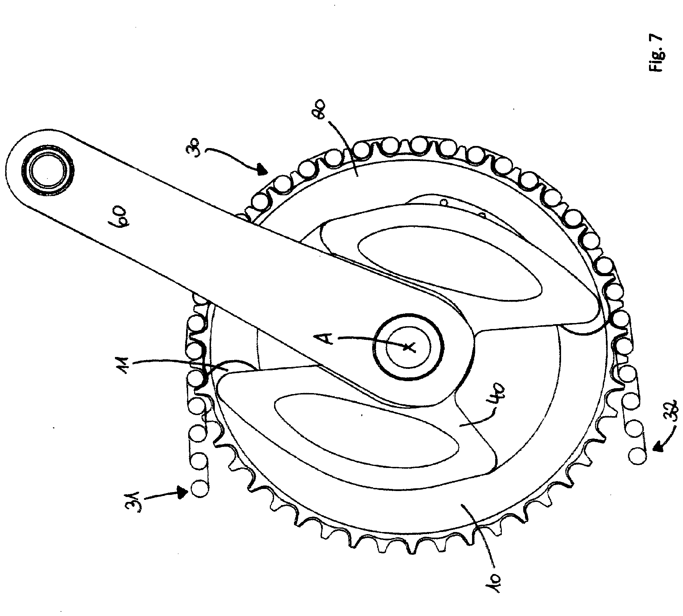

Figur 7 zeigt eine schematische Außenansicht der erfindungsgemäßen Kettenringanordnung, die sich mit einer zum Teil dargestellten Antriebskette 30 in Eingriff befindet. Die schematische Darstellung der Kette zeigt Innenlaschenglieder (Verbindungslinien zwischen den Röllchen innen) und Außenlaschenglieder (Verbindungslinien zwischen den Röllchen außen). Das erste und zweite Kettenring-Segment 10, 20 ist jeweils an zwei Lagern mit dem Stern 40 verbunden. Die Tretkurbel 60 ist an den Stern 40 drehmomentübertragend montiert, so dass eine Tretkraft des Fahrers von der Tretkurbel 60 über den Stern 40 auf die Kettenring-Segmente 10, 20 und die Antriebskette 30 übertragen werden kann.

In der dargestellten Stellung der Tretkurbel 60 befindet sich das zweite Kettenring-Segment 20 in der vorderen Hälfte der Fahrradkurbelanordnung, die sich in Eingriff mit der Kette 30 befindet. Entsprechend befindet sich das erste Kettenring-Segment 10 in der hinteren Hälfte der Kurbelanordnung größtenteils außer Eingriff mit der Antriebskette 30. Die einlaufende Kette steht unter Zug bzw. Last zwischen dem vorderen Kettenring und der hier nicht dargestellten hinteren Mehrfach-Ritzelanordnung - die einlaufende Kette befindet sich im Lasttrum 31. Die auslaufende Kette dahin gegen steht nicht unter Zug bzw. Last und befindet sich im Leertrum 32.

In der gezeigten Stellung steht das erste Kettenring-Segment 10 lediglich mit den beiden ersten Zähen am Vorderende 11 mit der Kette 30 in Eingriff. Beim dargestellten Eintreten des Segments 10 in das Lasttrum 31 der Kette 30, werden die durch den Schräglauf bedingten Axialkräfte F von der Kette 30 auf die Zähne und somit auf das Segment 10 übertragen, nicht aber die Zugkräfte der Kette. Somit kann sich das noch nicht unter Last stehende Segment 10 in axialer Richtung A bewegen. Die letzten Zähne am Rückende 12 des ersten Segments 10 sind in dieser Stellung noch in Eingriff mit der Kette 30. Dieser Teil der Kette 30 befindet sich im Leertrum 31 und steht daher nicht unter Antriebslast, so dass auch das Segment 10 nicht belastet wird. Die letzten sich in Eingriff befindlichen Zähne übertragen keine Antriebslast, die Kettenröllchen liegen nicht an der Lastflanke der Zähne an.

Dreht man die Tretkurbelkurbel 60 in Antriebsrichtung weiter, wird das erste Segment 10 oben mit der Kette 30 weiter in Eingriff gebracht. Sobald die Lastflanken der Zähne des ersten Segments 10 an den Rollen der Kette 30 angreifen, übertragen sie eine Antriebskraft auf die Kette 30. Das Segment 10 steht dann unter Last. Je mehr Zähne des Kettenring-Segments 10 mit der Kette 30 in Eingriff stehen, desto schwerer lässt sich das Segment 10 axial bewegen. Die Axialkraft F des Kettenschräglaufs ist irgendwann nicht mehr ausreichend, um das unter Last stehende Segment 10 in axialer Richtung zu bewegen.

Dreht man die Tretkurbel 60 weiter in Antriebsrichtung, wiederholt sich das oben beschriebene mit dem zweiten Kettenring-Segment 20. Gerade beim Eintreten des Segments 20 in das Lasttrum 31 der Kette 30 werden die Axialkräfte F der Kette 30 auf das noch nicht unter Last stehende Segment 20 übertragen und bewegen es in eine vom Schräglauf abhängige Axialrichtung A.

Die Bewegung der Segmente 10, 20 relativ zueinander ist durch das Spiel in der Verbindung an ihren Enden begrenzt. Je Kurbelumdrehung macht sowohl das erste Segment 10, als auch das zweite Segment 20 eine solche Relativbewegung in axialer Richtung A. Das heißt, der Kettenring verschiebt sich je Kurbelumdrehung in zwei Schritten (jeweils beim Eintreten der Segmente). Die Verschiebung der Segmente bzw. des Kettenrings findet solange statt, solange eine Axialkraft F auf die Segmente wirkt, also solange sich die Kette im Schräglauf befindet. Ist die ideale Kettenlinie erreicht, werden keine Axialkräfte F mehr auf die Zähne der Segmente übertragen und der Kettenring verbleibt in dieser Position.

Figur 8 zeigt eine Seitenansicht der erfindungsgemäßen Kettenringanordnung mit der Tretkurbel 60, wobei das Segment 10 gegenüber dem Stern 40 verkippt ist. Zur besseren Visualisierung ist das Verkippen hier stark übertrieben über das gesamte Kettenring-Segment dargestellt. Das Verkippen wird durch die Ausgestaltung der Kettenring-Segmente 10, 20 ermöglicht. Vorzugsweise weisen die Öffnungen 15, 25 der Segmente 10, 20 dazu Schrägen 18, 28 auf. Die Bolzen 42, 52 des Sterns 40 greifen in die Öffnungen ein, wobei die Schrägen ein Verkippen der Segmente 10, 20 gegenüber des Sterns 40 erlauben. Die Schrägen sind am besten in den Figuren 4a und 4b zu erkennen. In der dargestellten Position hat sich das Segment 10 aus der Vertikalen bewegt und steht in einem Winkel zu dieser. Je nach Schräglauf der Kette verkippen die Segmente 10, 20 nach innen oder außen. Im gezeigten Beispiel ist das Segment 10 nach innen verkippt, was auf einen Schräglauf der Kette nach innen, also ein Schalten an der hinteren Mehrfach-Ritzelanordnung von einem kleineren auf ein größeres Ritzel hinweist. Das Verkippen der Segmente 10, 20 gegenüber dem Stern 40 unterstützt die schrittweise Verschiebung des Kettenrings. Das hier dargestellte Verkippen nach innen beschleunigt also die Bewegung des Kettenrings entlang der Rotationsachse A nach innen. Es finden also zwei Bewegungen statt - eine Kippbewegung des Segments 10 gegenüber dem Bolzen 42 des Sterns 40 und eine Axialbewegung bzw. Gleitbewegung des Segments 10 entlang der Führungsfläche 46 des Sterns 40. Die entsprechende Kipp- bzw. Schwenkachse und die Gleitebene sind in Figur 5a dargestellt.

In dieser Ansicht ist auch ein axialer Anschlag 48 am Stern 40 zu erkennen. Dieser begrenzt die Axialbewegung der Segmente nach innen und verhindert, dass die Segmente vom Stern 40 abfallen.

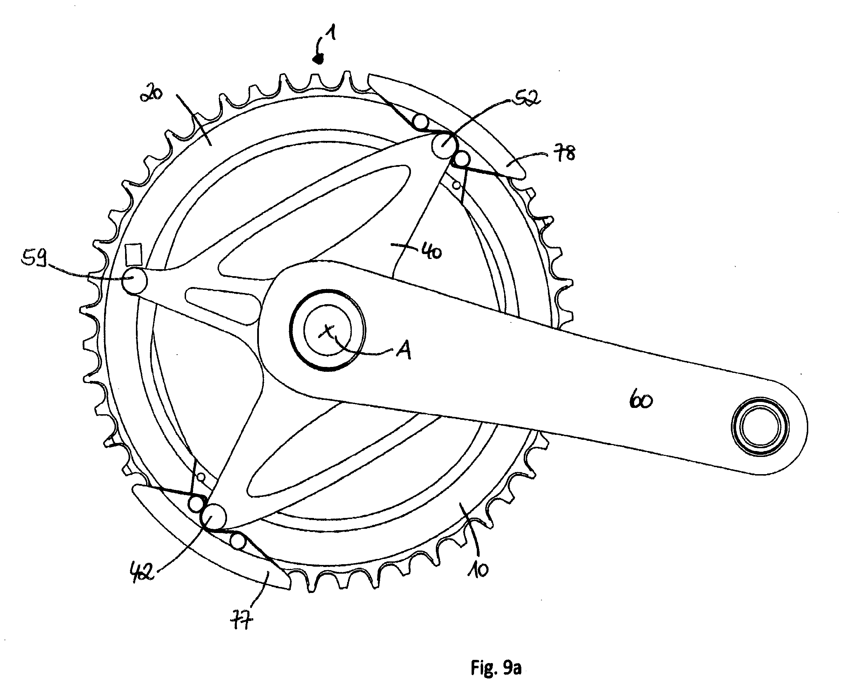

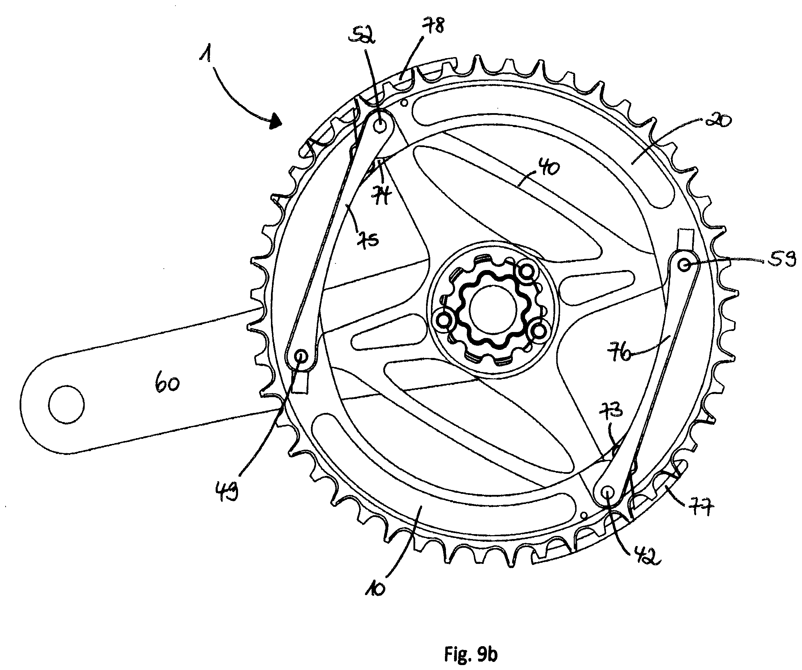

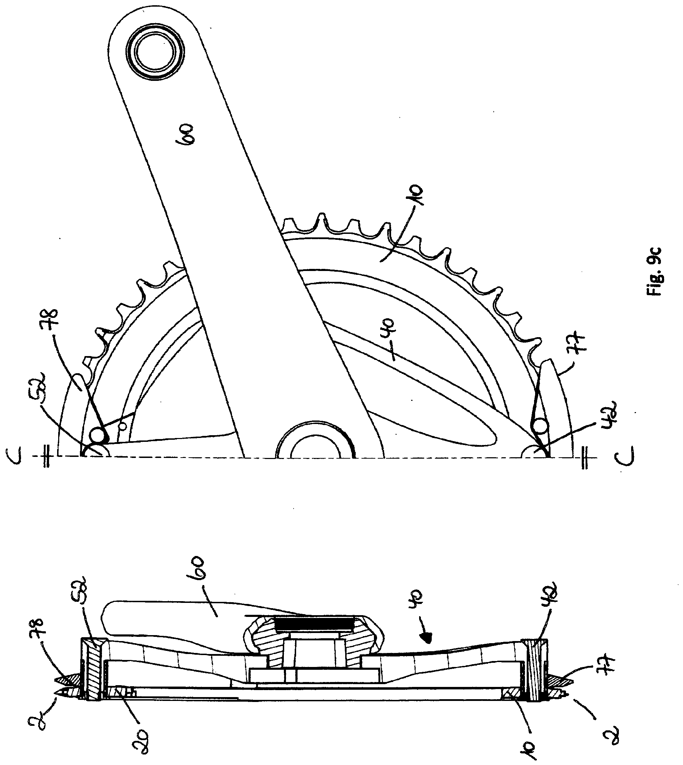

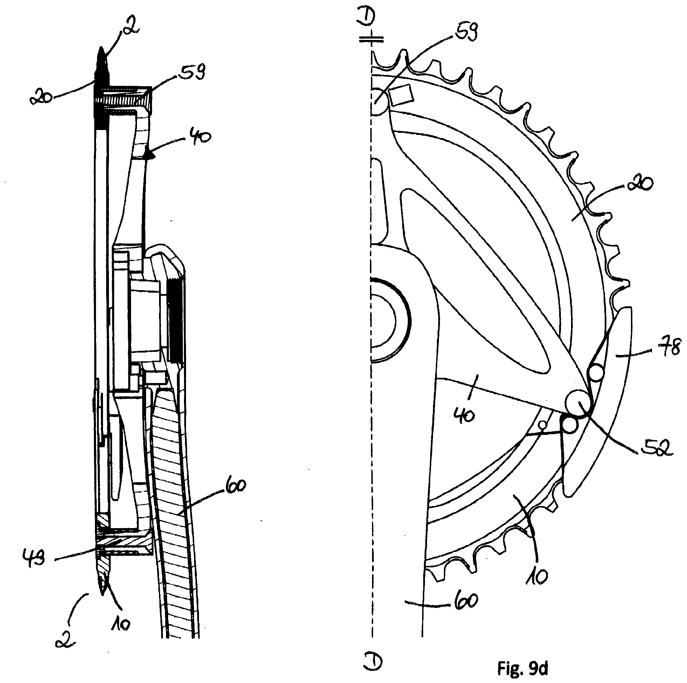

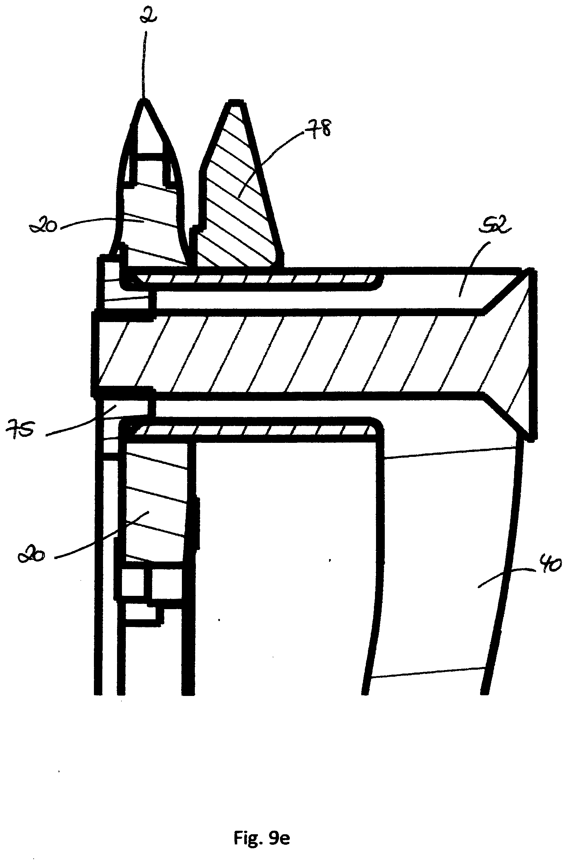

Figuren 9a, b, c und d zeigen eine Tretkurbelanordnung mit einer zweiten Ausführungsform des erfindungsgemäßen Kettenrings 1' und der entsprechenden Kettenringanordnung.

Für Teile, die sich in Form und Funktion nur unbedeutend von der ersten Ausführungsform unterscheiden, werden die gleichen Bezugszeichen verwendet.

Figur 9a ist eine Außenansicht der Kettenringanordnung mit einem Kettenring 1', welcher ebenfalls aus zwei Kettenring-Segmenten 10', 20' besteht, die an ihren Enden miteinander beweglich verbunden sind. Die Enden der Segmente 10', 20'greifen ebenfalls ineinander ein, allerdings wird die Aussparung diesmal durch das Stützelement 77, 78 auf der Außenseite und eine Nase 73, 74 auf der Innenseite realisiert, in die das Ende des Segments eingreift. Die Segmente 10', 20' sind an jeweils zwei Lagerelementen mit zwei Gegenlagern am Stern 40' verbunden, so dass sie sich relativ zu ihm in axialer Richtung A bewegen können. Der Stern 40' weist vier Bolzen 42, 52, 49, 59 auf. Zwei Bolzen 42, 49 des Sterns 40' greifen in zwei Öffnungen des ersten Segments 10' ein. Und zwei Bolzen 52, 59 des Sterns 40' greifen in zwei Öffnungen des zweiten Segments 20' ein. Die Bolzen 49, 59 stellen jeweils ein zweites Gegenlager für die Segmente 10', 20' dar und ersetzen die Führungsflächen der ersten Ausführungsform.

Die Segmente 10', 20' weisen jeweils an ihrem Vorderende ein Stützelement 77, 78 auf. Die Stützelemente 77, 78 sind entweder fest mit den Segmenten 10', 20' verbunden oder einstückig mit diesen ausgebildet. Im gezeigten Beispiel sind die Stützelemente 77, 78 mit den Kettenring-Segmenten 10', 20' jeweils zweifach vernietet.

Figur 9b zeigt in der Innenansicht, dass die beiden Segmente 10', 20' mittels Stabilisierungselementen 75, 76 zusätzlich verbunden sind. Die Stabilisierungselemente 75, 76 dienen der Versteifung des Sterns 40' und stellen gleichzeitig den inneren Axialanschlag für die Segmente 10', 20'dar.

Figur 9c und 9d zeigen Schnitte und korrespondierende Außenansichten durch die Tretkurbelanordnung - einmal entlang der Linie C-C durch die Bolzen 42, 52 und einmal entlang der Linie D-D durch die Bolzen 49, 59 geschnitten.

In Figur 9c ist die Anordnung der Stützelemente 77, 78 axial versetzt neben den Zähnen 2 der Segmente 10', 20' dargestellt.

Figur 9d stellt eine vergrößerte Detailansicht aus Fig. 9c dar. Der Zahn 2 des zweiten Segments 20' ist asymmetrisch ausgebildet. Die Zahnspitze ist nicht mittig, sondern versetzt zur Mitte angeordnet. Durch die vergrößerte Fase an der rechten bzw. äußeren Seite des Zahns 2 ergibt sich eine verbesserte Funktion beim Eingleiten des Zahns 2 in die Antriebskette und damit für die axiale Verschiebung des Kettenblatt-Segments 20' nach innen bzw. links. Die reduzierte Funktion der linken bzw. inneren Fase des Zahns wird durch die Funktion des Stützelements 78 zumindest teilweise kompensiert. Das Stützelement 78 ist so am Segment 20' angebracht, dass die nach außen weisenden Kettenlaschen einer mit dem Zahn 2 in Eingriff gebrachten Kette (hier nicht dargestellt) zwischen dem Zahn 2 und dem Stützelement 78 eingreifen.

Eine sich im Schräglauf befindliche Kette würde somit nicht nur Axialkräfte F auf die Zähne des Kettenrings bzw. seiner Segmente übertragen, sondern auch auf das Stützelement. Genauer gesagt, werden die Axialkräfte F der Antriebskette auf die Zähne der Segmente übertragen, indem die Innenflächen der Kettenlaschen am Zahn angreifen. Je nach Schräglauf drücken die Innenflächen der Kettenlaschen entweder gegen die innere (dem Fahrradrahmen zugewandte) oder äußere (vom Fahrradrahmen abgewandte) Seite des Zahns. Die Außenflächen der Kette drücken zusätzlich gegen das Stützelement. Im dargestellten Ausführungsbeispiel sind die Stützelemente 77, 78 aus Platzgründen nur auf einer Seite vom Segment angebracht - nämlich auf der äußeren Seite, so dass auch nur der Kettenschräglauf in diese eine Richtung auf das Stützelement 78 wirkt. Die Axialbewegung des Kettenrings wird damit zusätzlich unterstützt. Eine Ausrichtung des Kettenrings entsprechend der Kettenposition auf den hinteren Ritzeln wird beschleunigt und die ideale Kettenlinie rascher hergestellt.

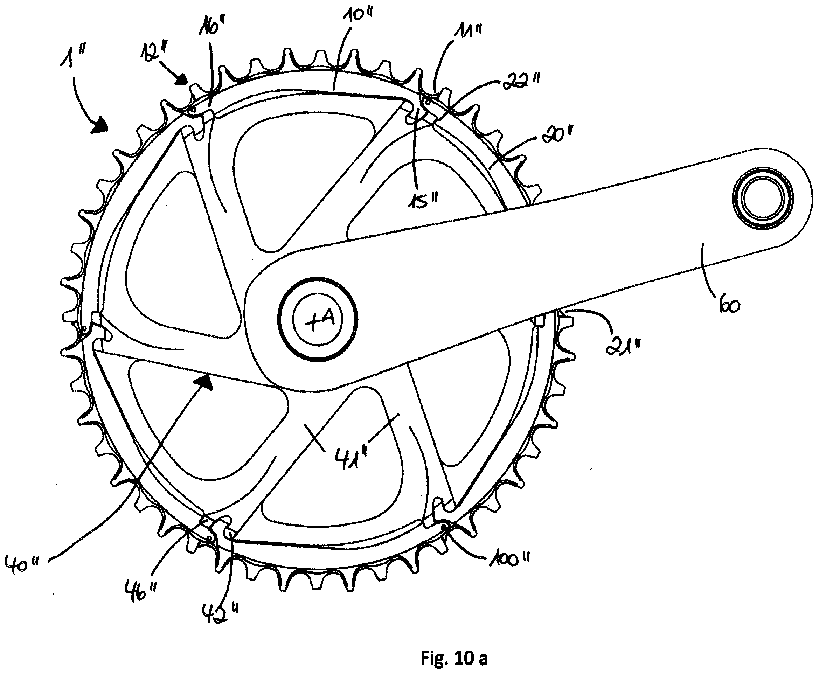

Figur 10a zeigt die Außenansicht einer dritten Ausführungsform einer erfindungsgemäßen Kettenringanordnung. Im Unterschied zu den vorherigen Ausführungen, besteht der Kettenring 1" aus sechs Segmenten 10", 20". Das Funktionsprinzip bleibt grundsätzlich das gleiche, unabhängig von der Anzahl der Segmente. Jeweils benachbarte Segmente sind an ihren Enden 11", 22" in axialer Richtung beweglich miteinander verbunden. Das Axialspiel zwischen den Enden 11", 22" erlaubt es den Segmenten 10", 20", sich relativ zueinander zu bewegen. Die Segmente bewegen sich mit jeder Kurbelumdrehung jeweils beim Einlaufen in die Antriebskette in Richtung des Schräglaufs der Kette (wie in Zusammenhang mit Figur 7 erklärt). Bei sechs Segmenten finden sechs kleine Bewegungsschritte je Kurbelumdrehung statt. Diese Bewegungsschritte der Segmente resultieren in einer Axialbewegung des gesamten Kettenrings 1" entlang des Sterns 40".

Der Stern 40 " weist in diesem Ausführungsbeispiel sechs gleiche Arme 41" auf. Jeder Arm 41" weist an seinem radial äußeren Ende zwei Gegenlager 42" und 46"auf. Das erste Gegenlager 42" wirkt jeweils mit dem ersten Lagerelement 15", 25" am Vorderende 11", 21" eines Segments 10", 20" zusammen. Dabei umgreift das Segment das Ende des Arms 41", so dass zum einen ein Drehmoment vom Stern 40" auf den Kettenring 1" übertragen wird, und sich zum anderen das Segment in axialer Richtung A relativ zum Stern 40" bewegen kann. Das erste Lagerelement am Segment ist in diesem Fall als eine Kombination aus Öffnung und Führungsfläche ausgebildet. Das entsprechende Gegenlager am Stern 40" ist als Kombination aus Bolzen und Führungsfläche ausgebildet. Das zweite Gegenlager 46" des Sterns 40" wirkt mit dem zweiten Lagerelement 16", 26" am Rückende 12", 22" eines Segments 10", 20" zusammen. Das zweite Lagerelement und das zweite Gegenlager sind jeweils als Führungsflächen ausgebildet. Die Führungsflächen der Segmente gleiten entlang der Führungsflächen am Stern 40 in axialer Richtung A. Die Arme 41" sind an ihren nach radial außen weisenden Enden miteinander verbunden. Dies erhöht die Stabilität, ist aber nicht zwingend notwendig. Die Enden von jeweils benachbarten Segmenten sind mittels eines Vorsprungs 13", 23" und einer Aussparung 14", 24" in Richtung der Rotationsachse A beweglich miteinander verbunden. Jeweils ein Vorderende eines Segments greift in das Rückende eines benachbarten Segments ein. Ein Spiel zwischen Vorsprung und Aussparung ermöglicht eine Relativbewegung zwischen den benachbarten Segmenten.

Zusätzlich zu dieser beweglichen Verbindung sind die sich zugewandten Enden von benachbarten Segmenten 10", 20" jeweils mit einem Stift 100 verbunden. Die zusätzliche Verbindung mittels Stift 100 ist so ausgebildet, dass sich die benachbarten Segmente zwar in axialer Richtung relativ zueinander bewegen können, nicht aber in radialer Richtung außer Eingriff geraten. Wie gezeigt, lässt sich dies verwirklichen, indem ein Stift 100 sowohl das Vorderende 11" eines Segments 10", als auch das Rückende 22" des benachbarten Segments 20" durchdringt. Dabei ist der Stift 100 in die zwei Löcher im Rückende 22" des Segments 20" eingepresst (Presspassung). Ein weiteres Loch im Vorderende 11" ist größer als der Durchmesser des Stifts 100 ausgebildet (Spielpassung), so dass sich das erste Segment 10" relativ zum benachbarten zweiten Segment 20" bewegen kann. Der Stift 100 verhindert, dass sich die Segmente ungewollt vom Stern 40" lösen. Dies ist insbesondere dann von Bedeutung, wenn die Segmente nicht mit der Antriebskette in Eingriff stehen und daher von dieser nicht auf dem Stern 40 gehalten werden.

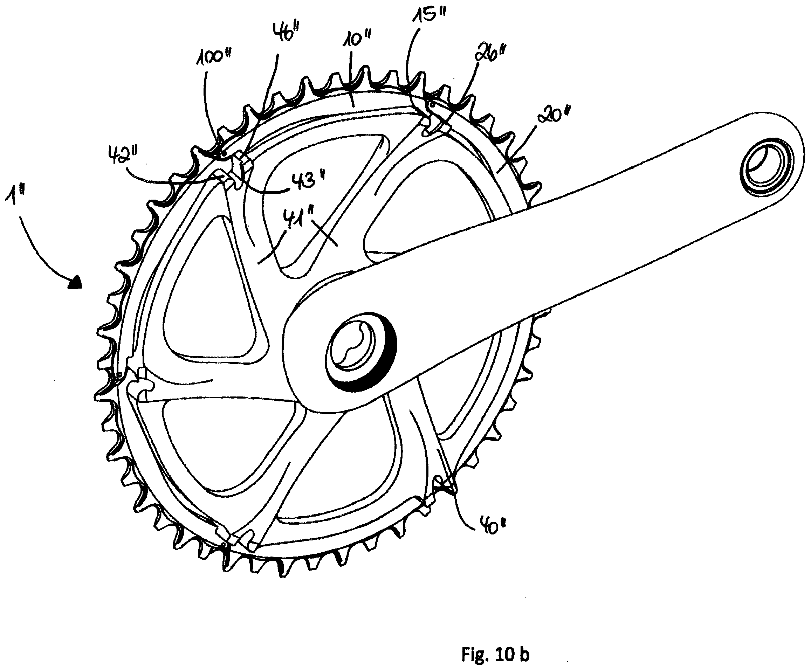

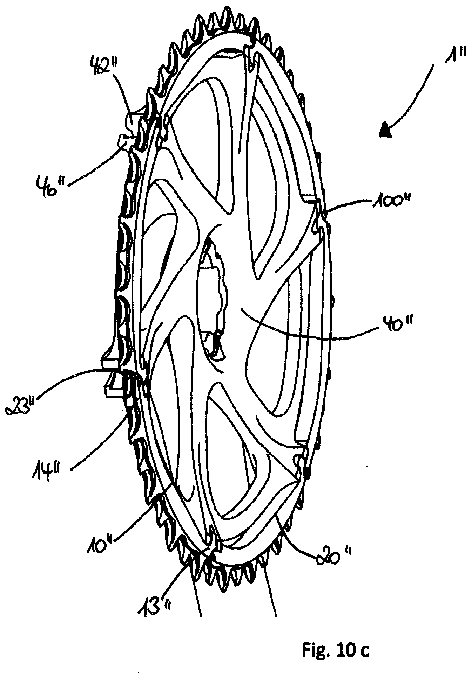

Figur 10b und 10c zeigen die perspektivische Außen- und Innenansicht der dritten Ausführungsform. Die dargestellte Stellung zeigt den Kettenring am inneren axialen Anschlag (in der Stellung verdeckt), in der sich der Kettenring in axialer Richtung mit einem der größten hinteren Ritzel ausgerichtet hat. Entsprechend würde der äußere axiale Anschlag 43" erreicht werden, wenn sich der Kettenring 1" mit einem der kleinsten hinteren Ritzeln ausrichtet.

Grundsätzlich könnten die inneren und/oder axialen Anschläge auch einstellbar ausgebildet sein. Solche einstellbaren Anschläge würden eine Anpassung der maximalen Axialbewegung des Kettenrings auf verschieden breite hintere Mehrfach-Ritzelanordnungen erlauben. Bei einer sehr breiten Mehrfach-Ritzelanordnung mit einer großen Anzahl von 12 oder mehr Ritzeln muss der Kettenring eine größere Axialbewegung entlang der Rotationsachse vollziehen, als bei einer schmalen Mehrfach-Ritzelanordnung mit einer geringeren Anzahl von Ritzeln.

Die Bestandteile der erfindungsgemäßen Kettenringanordnung sind vorzugsweise aus Materialien wie Stahl, Titan oder Aluminium gefertigt - mit oder ohne Legierungen. Andere Materialen, insbesondere leichtere, sind ebenfalls denkbar. Vorzugsweise sind beispielsweise die Stützelemente aus einem Kunststoff, insbesondere einem thermoplastischen Kunststoff wie Polystyrol oder Polyamid ausgebildet, das einfach in Form zu bringen ist. Der Kunststoff kann auch ein glasfaserverstärkter Kunststoff sein. Die Kombination aus metallischen und thermoplastischen Materialen ist vorteilhaft bezüglich des Gewichts und der Geräuschbildung. Vorteilhaft wäre es, allgemein einstellbare und auch nichteinstellbare Anschläge mit Dämpfungselementen aus Gummi oder Kunststoff zu versehen, um Geräusche beim Auftreffen des Kettenrings zu vermeiden.

Um die sich relativ zueinander bewegenden Teile vor Verschmutzung zu schützen und damit eine störungsfreie Funktionsfähigkeit zu gewährleisten, kann der erfindungsgemäße Antrieb eine Hülle oder Abdeckung aufweisen. Die Abdeckung verhindert oder verringert das Eintreten von Fremdkörpern wie Schmutz, Staub und Wasser. Besonders die beweglichen Verbindungen zwischen benachbarten Segmenten und die Lager zwischen den Segmenten und dem Stern sollten vor Verschmutzung geschützt werden. Eine schmutzundurchlässige Hülle bzw. Abdeckung wäre insbesondere in diesen Bereichen von Bedeutung.

Für ein besseres Verständnis wird die Erfindung anhand der folgenden Beispiele weiter erläutert:
1. Kettenring (1) für eine Kettenringanordnung für ein Fahrrad aufweisend:
   - ein erstes Kettenring-Segment (10), das drehbar um eine Rotationsachse (A) anordbar ist,
   - ein zweites Kettenring-Segment (20), das drehbar um die Rotationsachse (A) anordbar ist, wobei
   das erste Kettenring-Segment (10) in einer Umfangsrichtung U ein erstes Vorderende (11) und ein erstes Rückende (12) aufweist, und
   das zweite Kettenring-Segment (20) in einer Umfangsrichtung (U) ein zweites Vorderende (21) und ein zweites Rückende (22) aufweist, und
   das erste Vorderende (11) des ersten Kettenring-Segments (10) und das zweite Rückende (22) des zweiten Kettenring-Segments (20) beweglich verbunden sind, so dass sich das erste Kettenring-Segment (10) und das zweite Kettenring-Segment (20) in Richtung der Rotationsachse (A) relativ zueinander bewegen können, wobei
   das erste Kettenring-Segment (10) und das zweite Kettenring-Segment (20) eine Vielzahl von Zähnen (2) entlang ihres äußeren Umfangs zum Eingreifen in eine Antriebskette (30) aufweisen.
2. Kettenring nach Beispiel 1, wobei
   das erste Kettenring-Segment (10) an seinem ersten Vorderende (12) einen Vorsprung (13) aufweist, und das zweite Kettenring-Segment (20) an seinem zweiten Rückende (22) eine Aussparung (24) aufweist, die ineinandergreifen.
3. Kettenring nach Beispiel 2, wobei
   in Richtung der Rotationsachse (A) gesehen eine Breite des Vorsprungs (13) geringer ist, als eine Breite der Aussparung (24), so dass eine Relativbewegung zwischen dem ersten Kettenring-Segment (10) und dem zweiten Kettenring-Segment (20) in Richtung der Rotationsachse (A) möglich ist.
4. Kettenring nach einem der vorhergehenden Beispiele, wobei
   der Kettenring (1) von einer Axialkraft (F) in die Richtung der Rotationsachse (A) bewegt wird, die von der Antriebskette (30) auf den Kettenring (1) wirkt, wenn die Antriebskette (30) im Schräglauf in eine Abfolge von Zähnen der Vielzahl von Zähnen (2) eingreift.
5. Kettenring nach einem der vorhergehenden Beispiele, wobei
   die Vielzahl von Zähnen (2) alternierende und sich unterscheidende erste Zähne (3, 5) und zweite Zähne (4, 6) aufweist.
6. Kettenring nach einem der vorhergehenden Beispiele, wobei
   das erste und das zweite Kettenring-Segment (10, 20) identisch ausgebildet sind.
7. Kettenring nach einem der vorhergehenden Beispiele, wobei
   das erste und das zweite Kettenring-Segment (10, 20) jeweils ein Stützelement (77, 78) aufweist, das axial versetzt vom ersten und zweiten Vorderende (11, 21) angeordnet und ausgebildet ist, um mit einer Außenfläche (33) der Antriebskette (30) zusammenzuwirken.
8. Kettenring nach einem der vorhergehenden Beispiele, wobei
   das erste Rückende (12) des ersten Kettenring-Segments (10) und das zweite Vorderende (21) des zweiten Kettenring-Segments (20) beweglich verbunden sind.
9. Kettenringanordnung für eine Tretkurbelanordnung für ein Fahrrad, aufweisend:
   einen Kettenring (1) nach einem der vorhergehenden Beispiele,
   einen Stern (40), der zur drehbaren Befestigung um die Rotationsachse (A) und zur drehmomentübertragenden Verbindung des Kettenrings (1) mit einer Tretkurbel (60) geeignet ist, wobei
   der Kettenring (1) beweglich am Stern (40) gelagert ist, um eine Bewegung des Kettenrings (1) relativ zu dem Stern (40) in Richtung der Rotationsachse (A) zu ermöglichen.
10. Kettenringanordnung nach Beispiel 9, wobei
   das erste und zweite Kettenring-Segment (10, 20) jeweils ein erstes Lagerelement (15, 25) aufweist.
11. Kettenringanordnung nach Beispiel 10, wobei
   das erste und zweite Kettenring-Segment (10, 20) jeweils ein zweites Lagerelement (19, 29, 16, 26) aufweist.
12. Kettenringanordnung nach Beispiel 10 oder 11, wobei
   das erste und/oder das zweite Lagerelement als Öffnung (15, 25, 19, 29), Führungsfläche (16, 26) oder Bolzen ausgebildet ist.
13. Kettenringanordnung nach einem der Beispiele 9 bis 12, wobei
   der Stern (40) einen ersten Arm (41) und einen dritten Arm (51) mit jeweils einem ersten Gegenlager (42, 52) aufweist.
14. Kettenringanordnung nach Beispiel 13, wobei
   der Stern (40) einen zweiten Arm (45) und einen vierten Arm (55) mit jeweils einem zweiten Gegenlager (46, 56, 49, 59) aufweist.
15. Kettenringanordnung nach Beispiel 13 oder 14, wobei
   das erste und/oder das zweite Gegenlager als Öffnung, Führungsfläche (46, 56) oder Bolzen (42, 52, 49, 59) ausgebildet ist.
16. Kettenringanordnung nach Beispiel 12 und 15, wobei
   ein Durchmesser des Bolzens (42, 52, 49, 59) geringer ist, als ein Durchmesser der Öffnung (15, 25, 19, 29), um die Bewegung des Kettenrings (1) relativ zu dem Stern (40) in Richtung der Rotationsachse (A) zu ermöglichen.
17. Kettenringanordnung nach Beispiel 16, wobei
   die Öffnung (15, 25, 19, 29) eine Schräge (18, 28) aufweist, um ein Verkippen des Kettenring-Segments (10, 20) relativ zum Stern (40) zu ermöglichen.
18. Kettenringanordnung nach Beispiel 12 und 15, wobei
   sich die Führungsfläche (16, 26) eines Kettenblatt-Segments (10, 20) entlang der Führungsfläche (46, 56) des Sterns (40) in Richtung der Rotationsachse (A) bewegt.
19. Kettenringanordnung nach einem der vorhergehenden Beispiele, aufweisend einen einzigen Kettenring (1).
20. Antriebsanordnung für ein Fahrrad, aufweisend:
   eine Kettenringanordnung nach einem der Beispiele 9 bis 19,
   eine Mehrfach-Ritzelanordnung (80) für eine Hinterradnabe,
   eine Antriebskette (30) zum Eingreifen in einen Kettenring (1) der Kettenringanordnung und in ein Ritzel (81) der Mehrfach-Ritzelanordnung (80) und zum Übertragen einer Antriebskraft (Z) von der Kettenringanordnung auf die Mehrfach-Ritzelanordnung (80),
   ein Schaltwerk (90) zur Positionierung der Antriebskette (30) auf einem der Ritzel (81) der Mehrfach-Ritzelanordnung (80), wobei
   sich der Kettenring (1) der Kettenringanordnung mit der Position der Antriebskette (30) auf der Mehrfach-Ritzelanordnung (80) entlang der Rotationsachse (A) ausrichtet.
21. Antriebsanordnung nach Beispiel 20, wobei,
   die Mehrfach-Ritzelanordnung (80) zumindest elf Ritzel (81) aufweist.
22. Antriebsanordnung nach Beispiel 20 oder 21, wobei
   die Mehrfach-Ritzelanordnung (80) zumindest ein Ritzel (81) mit alternierenden und sich unterscheidenden ersten Zähnen (82) und zweiten Zähnen (83) aufweist.

## Patentansprüche

1. Kettenring (1) für eine Kettenringanordnung für ein Fahrrad aufweisend:
- ein erstes Kettenring-Segment (10), das drehbar um eine Rotationsachse (A) anordbar ist,
- ein zu dem ersten Kettenring-Segment (10) benachbartes, zweites Kettenring-Segment (20), das drehbar um die Rotationsachse (A) anordbar ist,
wobei das erste Kettenring-Segment (10) in einer Umfangsrichtung U ein erstes Vorderende (11) und ein erstes Rückende (12) aufweist, und
das zweite Kettenring-Segment (20) in einer Umfangsrichtung (U) ein zweites Vorderende (21) und ein zweites Rückende (22) aufweist, und
das erste Vorderende (11) des ersten Kettenring-Segments (10) und das zweite Rückende (22) des zweiten Kettenring-Segments (20) beweglich verbunden sind,
so dass sich das erste Kettenring-Segment (10) und das zweite Kettenring-Segment (20) in Richtung der Rotationsachse (A) relativ zueinander bewegen können, wobei das erste Kettenring-Segment (10) und das zweite Kettenring-Segment (20) eine Vielzahl von Zähnen (2) entlang ihres äußeren Umfangs zum Eingreifen in eine Antriebskette (30) aufweisen, **dadurch gekennzeichnet, dass** die Axialbewegung eines Kettenring-Segments (10, 20) durch ein benachbartes Kettenring-Segment (10, 20) begrenzt ist, mit dem es beweglich verbunden ist.

2. Kettenring nach Anspruch 1, wobei
das erste Kettenring-Segment (10) an seinem ersten Vorderende (12) einen Vorsprung (13) aufweist, und das zweite Kettenring-Segment (20) an seinem zweiten Rückende (22) eine Aussparung (24) aufweist, die ineinandergreifen.

3. Kettenring nach Anspruch 2, wobei
in Richtung der Rotationsachse (A) gesehen eine Breite des Vorsprungs (13) geringer ist, als eine Breite der Aussparung (24), so dass eine Relativbewegung zwischen dem ersten Kettenring-Segment (10) und dem zweiten Kettenring-Segment (20) in Richtung der Rotationsachse (A) möglich ist.

4. Kettenring nach einem der vorhergehenden Ansprüche, wobei
der Kettenring (1) von einer Axialkraft (F) in die Richtung der Rotationsachse (A) bewegt wird, die von der Antriebskette (30) auf den Kettenring (1) wirkt, wenn die Antriebskette (30) im Schräglauf in eine Abfolge von Zähnen der Vielzahl von Zähnen (2) eingreift.

5. Kettenring nach einem der vorhergehenden Ansprüche, wobei
die Vielzahl von Zähnen (2) alternierende und sich unterscheidende erste Zähne (3, 5) und zweite Zähne (4, 6) aufweist.

6. Kettenring nach einem der vorhergehenden Ansprüche, wobei
das erste und das zweite Kettenring-Segment (10, 20) jeweils ein Stützelement (77, 78) aufweist, das axial versetzt vom ersten und zweiten Vorderende (11, 21) angeordnet und ausgebildet ist, um mit einer Außenfläche (33) der Antriebskette (30) zusammenzuwirken.

7. Kettenring nach einem der vorhergehenden Ansprüche, wobei
das erste Rückende (12) des ersten Kettenring-Segments (10) und das zweite Vorderende (21) des zweiten Kettenring-Segments (20) beweglich verbunden sind.

8. Kettenringanordnung für eine Tretkurbelanordnung für ein Fahrrad, aufweisend:
einen Kettenring (1) nach einem der vorhergehenden Ansprüche, einen Stern (40), der zur drehbaren Befestigung um die Rotationsachse (A) und zur drehmomentübertragenden Verbindung des Kettenrings (1) mit einer Tretkurbel (60) geeignet ist, wobei
der Kettenring (1) beweglich am Stern (40) gelagert ist, um eine Bewegung des Kettenrings (1) relativ zu dem Stern (40) in Richtung der Rotationsachse (A) zu ermöglichen.

9. Kettenringanordnung nach Anspruch 8, wobei
das erste und zweite Kettenring-Segment (10, 20) jeweils ein erstes Lagerelement (15, 25) aufweist.

10. Kettenringanordnung nach Anspruch 9, wobei
das erste und zweite Kettenring-Segment (10, 20) jeweils ein zweites Lagerelement (19, 29, 16, 26) aufweist.

11. Kettenringanordnung nach Anspruch 9 oder 10, wobei
das erste und/oder das zweite Lagerelement als Öffnung (15, 25, 19, 29), Führungsfläche (16, 26) oder Bolzen ausgebildet ist.

12. Kettenringanordnung nach einem der Ansprüche 8 bis 11, wobei
der Stern (40) einen ersten Arm (41) und einen dritten Arm (51) mit jeweils einem ersten Gegenlager (42, 52) aufweist.

13. Kettenringanordnung nach Anspruch 12, wobei
der Stern (40) einen zweiten Arm (45) und einen vierten Arm (55) mit jeweils einem zweiten Gegenlager (46, 56, 49, 59) aufweist.

14. Kettenringanordnung nach Anspruch 12 oder 13, wobei
das erste und/oder das zweite Gegenlager als Öffnung, Führungsfläche (46, 56) oder Bolzen (42, 52, 49, 59) ausgebildet ist.

15. Antriebsanordnung für ein Fahrrad, aufweisend:
eine Kettenringanordnung nach einem der Ansprüche 8 bis 14,
eine Mehrfach-Ritzelanordnung (80) für eine Hinterradnabe,
eine Antriebskette (30) zum Eingreifen in einen Kettenring (1) der Kettenringanordnung und in ein Ritzel (81) der Mehrfach-Ritzelanordnung (80) und zum Übertragen einer Antriebskraft (Z) von der Kettenringanordnung auf die Mehrfach-Ritzelanordnung (80),
ein Schaltwerk (90) zur Positionierung der Antriebskette (30) auf einem der Ritzel (81) der Mehrfach-Ritzelanordnung (80), wobei
sich der Kettenring (1) der Kettenringanordnung mit der Position der Antriebskette (30) auf der Mehrfach-Ritzelanordnung (80) entlang der Rotationsachse (A) ausrichtet.

## Claims

1. Chain ring (1) for a chain ring arrangement for a bicycle, said chain ring comprising:
- a first chain ring segment (10) which is arrangeable so as to be rotatable about a rotational axis (A),
- a second chain ring segment (20) which is adjacent to the first chain ring segment (10) and which is arrangeable so as to be rotatable about the rotational axis (A),
wherein the first chain ring segment (10) comprises a first front end (11) and a first rear end (12) in a circumferential direction U, and
the second chain ring segment (20) comprises a second front end (21) and a second rear end (22) in a circumferential direction U, and
the first front end (11) of the first chain ring segment (10) and the second rear end (22) of the second chain ring segment (20) are movably connected such that the first chain ring segment (10) and the second chain ring segment (20) are able to move relatively to one another in the direction of the rotational axis (A),
wherein the first chain ring segment (10) and the second chain ring segment (20) comprise a plurality of teeth (2) along their outer circumference for engaging in a drive chain (30), **characterized in that** the axial movement of a chain ring segment (10, 20) is limited by an adjacent chain ring segment (10, 20) with which it is movably connected.

2. Chain ring according to Claim 1, wherein
the first chain ring segment (10) comprises a projection (13) on its first front end (12), and the second chain ring segment (20) comprises a recess (24) on its second rear end (22), which projection and which recess interlock.

3. Chain ring according to Claim 2, wherein,
when viewed in the direction of the rotational axis (A), a width of the projection (13) is smaller than a width of the recess (24) such that a relative movement between the first chain ring segment (10) and the second chain ring segment (20) is possible in the direction of the rotational axis (A).

4. Chain ring according to one of the preceding claims, wherein
the chain ring (1) is moved in the direction of the rotational axis (A) by an axial force (F) which acts from the drive chain (30) onto the chain ring (1) when the drive chain (30), in skew, engages in a sequence of teeth of the plurality of teeth (2).

5. Chain ring according to one of the preceding claims, wherein
the plurality of teeth (2) comprises first teeth (3, 5) and second teeth (4, 6) which alternate and are different from one another.

6. Chain ring according to one of the preceding claims, wherein
the first and the second chain ring segments (10, 20) each comprise a support element (77, 78) which is arranged and realized axially offset from the first and the second front ends (11, 21) in order to interact with an outer surface (33) of the drive chain (30).

7. Chain ring according to one of the preceding claims, wherein
the first rear end (12) of the first chain ring segment (10) and the second front end (21) of the second chain ring segment (20) are movably connected.

8. Chain ring arrangement for a foot pedal arrangement for a bicycle, said chain ring arrangement comprising:
a chain ring (1) according to one of the preceding claims,
a star (40) which is suitable to be rotatably fastened about the rotational axis (A) and for connecting the chain ring (1) to a foot pedal (60) in a torque-transmitting manner, wherein
the chain ring (1) is mounted on the star (40) so as to be movable in order to enable a movement of the chain ring (1) relative to the star (40) in the direction of the rotational axis (A).

9. Chain ring arrangement according to Claim 8, wherein
the first and the second chain ring segments (10, 20) each comprise a first bearing element (15, 25).

10. Chain ring arrangement according to Claim 9, wherein
the first and the second chain ring segments (10, 20) each comprise a second bearing element (19, 29, 16, 26) .

11. Chain ring arrangement according to Claim 9 or 10, wherein
the first and/or the second bearing element is realized as an opening (15, 25, 19, 29), a guide surface (16, 26) or a bolt.

12. Chain ring arrangement according to one of Claims 8 to 11, wherein
the star (40) comprises a first arm (41) and a third arm (51), each with a first counter bearing (42, 52).

13. Chain ring arrangement according to Claim 12, wherein
the star (40) comprises a second arm (45) and a fourth arm (55), each with a second counter bearing (46, 56, 49, 59).

14. Chain ring arrangement according to Claim 12 or 13, wherein
the first and/or the second counter bearing is realized as an opening, a guide surface (46, 56) or a bolt (42, 52, 49, 59).

15. Drive arrangement for a bicycle, said drive arrangement comprising:
a chain ring arrangement according to one of Claims 8 to 14,
a multiple sprocket arrangement (80) for a rear wheel hub,
a drive chain (30) for engaging in a chain ring (1) of the chain ring arrangement and in a sprocket (81) of the multiple sprocket arrangement (80) and for transmitting a driving force (Z) from the chain ring arrangement to the multiple sprocket arrangement (80),
a rear derailleur (90) for positioning the drive chain (30) on one of the sprockets (81) of the multiple sprocket arrangement (80), wherein
the chain ring (1) of the chain ring arrangement is aligned with the position of the drive chain (30) on the multiple sprocket arrangement (80) along the rotational axis (A).

## Revendications

1. Plateau (1) pour un ensemble de plateau pour une bicyclette, présentant:
- un premier segment de plateau (10), qui peut être disposé de façon rotative autour d'un axe de rotation (A),
- un deuxième segment de plateau (20), voisin du premier segment de plateau (10), qui peut être disposé de façon rotative autour de l'axe de rotation (A),
dans lequel le premier segment de plateau (10) présente dans une direction périphérique U une première extrémité avant (11) et une première extrémité arrière (12), et
le deuxième segment de plateau (20) présente dans une direction périphérique (U) une deuxième extrémité avant (21) et une deuxième extrémité arrière (22), et
la première extrémité avant (11) du premier segment de plateau (10) et la deuxième extrémité arrière (22) du deuxième segment de plateau (20) sont reliées de façon mobile, de telle manière que le premier segment de plateau (10) et le deuxième segment de plateau (20) puissent se déplacer l'un par rapport à l'autre dans la direction de l'axe de rotation (A),
dans lequel le premier segment de plateau (10) et le deuxième segment de plateau (20) présentent une multiplicité de dents (2) le long de leur périphérie extérieure, destinées à engrener avec une chaîne de propulsion (30),
**caractérisé en ce que** le mouvement axial d'un segment de plateau (10, 20) est limité par un segment de plateau voisin (10, 20), auquel il est relié de façon mobile.

2. Plateau selon la revendication 1, dans lequel le premier segment de plateau (10) présente à sa première extrémité avant (12) une saillie (13), et le deuxième segment de plateau (20) présente à sa deuxième extrémité arrière (22) une découpe (24), qui s'engagent l'une dans l'autre.

3. Plateau selon la revendication 2, dans lequel, vue dans la direction de l'axe de rotation (A), une largeur de la saillie (13) est plus petite qu'une largeur de la découpe (24), de telle manière qu'un mouvement relatif dans la direction de l'axe de rotation (A) soit possible entre le premier segment de plateau (10) et le deuxième segment de plateau (20).

4. Plateau selon l'une quelconque des revendications précédentes, dans lequel le plateau (1) est déplacé dans la direction de l'axe de rotation (A) par une force axiale (F), qui agit de la chaîne de propulsion (30) sur le plateau (1), lorsque la chaîne de propulsion (30) engrène en direction oblique avec une séquence de dents de la multiplicité de dents (2).

5. Plateau selon l'une quelconque des revendications précédentes, dans lequel la multiplicité de dents (2) présente des premières dents (3, 5) et des deuxièmes dents (4, 6) alternées et différentes.

6. Plateau selon l'une quelconque des revendications précédentes, dans lequel le premier et le deuxième segments de plateau (10, 20) présentent respectivement un élément de soutien (77, 78), qui est disposé en décalage axial par rapport à la première et à la deuxième extrémités avant (11, 21) et qui est réalisé de façon à coopérer avec une face extérieure (33) de la chaîne de propulsion (30).

7. Plateau selon l'une quelconque des revendications précédentes, dans lequel la première extrémité arrière (12) du premier segment de plateau (10) et la deuxième extrémité avant (21) du deuxième segment de plateau (20) sont reliées de façon mobile.

8. Ensemble de plateau pour un ensemble de pédalier pour une bicyclette, présentant:
un plateau (1) selon l'une quelconque des revendications précédentes,
une étoile (40), qui convient pour la fixation rotative autour de l'axe de rotation (A) et pour la liaison de transmission de couple du plateau (1) avec un pédalier (60),
dans lequel le plateau (1) est monté de façon mobile sur l'étoile (40), afin de permettre un mouvement du plateau (1) par rapport à l'étoile (40) dans la direction de l'axe de rotation (A).

9. Ensemble de plateau selon la revendication 8, dans lequel le premier et le deuxième segments de plateau (10, 20) présentent respectivement un premier élément de palier (15, 25).

10. Ensemble de plateau selon la revendication 9, dans lequel le premier et le deuxième segments de plateau (10, 20) présentent respectivement un deuxième élément de palier (19, 29, 16, 26).

11. Ensemble de plateau selon la revendication 9 ou 10, dans lequel le premier et/ou le deuxième élément(s) de palier est/sont réalisé(s) sous la forme d'une ouverture (15, 25, 19, 29), d'une face de guidage (16, 26) ou d'un axe.

12. Ensemble de plateau selon l'une quelconque des revendications 8 à 11, dans lequel l'étoile (40) présente un premier bras (41) et un troisième bras (51) munis chacun d'un premier contre-appui (42, 52).

13. Ensemble de plateau selon la revendication 12, dans lequel l'étoile (40) présente un deuxième bras (45) et un quatrième bras (55) munis chacun d'un deuxième contre-appui (46, 56, 49, 59).

14. Ensemble de plateau selon la revendication 12 ou 13, dans lequel le premier et/ou le deuxième contre-appui (s) est/sont réalisé(s) sous la forme d'une ouverture, d'une face de guidage (46, 56) ou d'un axe (42, 52, 49, 59).

15. Ensemble de propulsion pour une bicyclette, présentant:
- un ensemble de plateau selon l'une quelconque des revendications 8 à 14,
- un ensemble de plusieurs pignons (80) pour un moyeu de roue arrière,
une chaîne de propulsion (30), destinée à engrener avec un plateau (1) de l'ensemble de plateau et avec un pignon (81) de l'ensemble de plusieurs pignons (80) et à transmettre une force de propulsion (Z) de l'ensemble de plateau à l'ensemble de plusieurs pignons (80),
un changement de vitesse (90) destiné à positionner la chaîne de propulsion (30) sur un des pignons (81) de l'ensemble de plusieurs pignons (80),
dans lequel le plateau (1) de l'ensemble de plateau s'aligne avec la position de la chaîne de propulsion (30) sur l'ensemble de plusieurs pignons (80) le long de l'axe de rotation (A).
